# EUROPÄISCHE PATENTSCHRIFT

(11) **EP 3 347 876 B1**
(45) Veröffentlichungstag und Bekanntmachung des Hinweises auf die Patenterteilung: **17.06.2020**
(21) Anmeldenummer: 16766511.6
(22) Anmeldetag: 07.09.2016
(51) Int. Cl.: G06T 13/40, G06T 19/20, H04N 7/15

(54) **VORRICHTUNG UND VERFAHREN ZUR ERZEUGUNG EINES MODELLS VON EINEM OBJEKT MIT ÜBERLAGERUNGSBILDDATEN IN EINER VIRTUELLEN UMGEBUNG**
DEVICE AND METHOD FOR GENERATING A MODEL OF AN OBJECT USING SUPERIMPOSED IMAGE DATA IN A VIRTUAL ENVIRONMENT
DISPOSITIF ET PROCÉDÉ POUR GÉNÉRER UN MODÈLE D'UN OBJET AU MOYEN DE DONNÉES-IMAGE DE SUPERPOSITION DANS UN ENVIRONNEMENT VIRTUEL

(30) Priorität: 09.09.2015 DE 102015217226
(43) Veröffentlichungstag der Anmeldung: 18.07.2018
(73) Patentinhaber: Bitmanagement Software GmbH, 82335 Berg (DE)
(72) Erfinder: SCHICKEL, Peter, 82335 Berg (DE)
(74) Vertreter: Stöckeler, Ferdinand
(86) Internationale Anmeldenummer: PCT/EP2016/071053
(87) Internationale Veröffentlichungsnummer: WO 2017/045981

(56) Entgegenhaltungen:
- Neha Raste: "3D Video Conferencing Using Monoscopic Camera", Internatinal Journal of Innovative Research and Development, 1. Januar 2015 (2015-01-01), XP055315783, Gefunden im Internet: URL:http://www.ijird.com/index.php/ijird/a rticle/download/59786/46762 [gefunden am 2016-11-02]
- Peter Eisert: "VIRTUAL VIDEO CONFERENCING USING 3D MODEL-ASSISTED IMAGE-BASED RENDERING", Proc. 2nd Conference on Visual Media Production CVMP 2005, London, UK, pp. 185-193, 1. November 2005 (2005-11-01), XP055315774, Gefunden im Internet: URL:http://iphome.hhi.de/eisert/papers/cvm p05.pdf [gefunden am 2016-11-02]
- BENJAMIN PETIT ET AL: "Multicamera Real-Time 3D Modeling for Telepresence and Remote Collaboration", INTERNATIONAL JOURNAL OF DIGITAL MULTIMEDIA BROADCASTING, Bd. 2010, 1. Januar 2010 (2010-01-01), Seiten 1-12, XP055346822, ISSN: 1687-7578, DOI: 10.1155/2010/247108
- HAO LI ET AL: "Facial performance sensing head-mounted display", ACM TRANSACTIONS ON GRAPHICS (TOG), Bd. 34, Nr. 4, 27. Juli 2015 (2015-07-27), Seiten 47:1-47:9, XP055346825, US ISSN: 0730-0301, DOI: 10.1145/2766939
- EISERT P: "Immersive 3D video conferencing: challenges, concepts, and implementations", VISUAL COMMUNICATIONS AND IMAGE PROCESSING; 8-7-2003 - 11-7-2003; LUGANO,, 8. Juli 2003 (2003-07-08), XP030080627,

## Beschreibung

Die vorliegende Erfindung bezieht sich auf das Gebiet der Erzeugung von Modellen eines Objekts, die mit Überlagerungsbilddaten angereichert werden und dem Einfügen des Modells in eine virtuelle Umgebung. Ausführungsbeispiele zeigen einen virtuellen Konferenzraum, in dem eine oder mehrere Personen basierend auf einem aktuellen Video der Person in Echtzeit, d.h. ohne dass für die Person(en) eine nennenswerte Verzögerung der eigenen Bewegung mit der Bewegung des Modells im virtuellen Raum erkennbar ist, dargestellt ist. Die Gesichts- bzw. Augenpartie der Person, die von der Datenbrille verdeckt werden, werden ferner unter Zuhilfenahme der Überlagerungsbilddaten, beispielsweise einer im Voraus aufgenommenen Darstellung der Augenpartie bzw. des Gesichts, überlagert bzw. wegretuschiert.

Bekannte Systeme, die beispielsweise die Unterhaltung in Chaträumen visualisieren, nutzen bislang zur Darstellung von Personen Avatare, d.h. künstliche Darstellungen, die keinen oder nur einen sehr geringen Bezug zu der dargestellten Person haben. In HAO LI ET AL: "Facial performance sensing head-mounted display" wird ein personalisiertes Model des Benutzers in einer Trainingsphase (d.h. Initialisierungsphase) ermittelt und die Signale, die den Gesichtsausdruck des HMD-Trägers darstellen, werden durch im HMD befindende Sensoren und eine RGB-Kamera ermittelt. Während des Betriebsmodus wird das personalisierte Model durch die o.g. Signale animiert.

Der vorliegenden Erfindung liegt daher die Aufgabe zugrunde, ein verbessertes Konzept zur Darstellung von Objekten in einer virtuellen Umgebung zu schaffen.

Diese Aufgabe wird durch den Gegenstand der unabhängigen Patentansprüche gelöst. Erfindungsgemäße Weiterbildungen sind in den Unteransprüchen definiert.

Ausführungsbeispiele zeigen die Erzeugung eines Modells aus einem Bilddatenstrom, beispielsweise einem (Echtzeit) Video Stream. Ist das Objekt z.B. eine Person, so kann der Person ein Gesicht oder eine Augenpartie einer anderen, beispielsweise prominenten, Person überlagert werden. Ferner ist es möglich, wenn die Person bei der Erstellung des Bilddatenstroms eine Datenbrille trägt, die Datenbrille des Modells in der virtuellen Umgebung mit einer Aufnahme der Augenpartie bzw. des Gesichts der Person ohne Datenbrille, die beispielsweise in einem Speicher vorgehalten wird, zu ersetzen bzw. zu überlagern.

Gemäß Ausführungsbeispielen kann das Modell eine zweidimensionale Darstellung der Person sein, das mit 2D-Überlagerungsbilddaten angereichert wird. Vorteilhaft sind jedoch Ausführungsbeispiele, in denen eine dreidimensionale Darstellung bzw. ein dreidimensionales Modell des Objekts, z.B. der Person, erzeugt wird und selbiges dreidimensionales Modell mit dreidimensionalen Überlagerungsbilddaten überlagert wird. Gemäß einem ersten Aspekt kann die Dreidimensionalität aus einem Blickwinkel, d.h. beispielsweise auf der Vorderseite des Objekts dargestellt werden. Dies wird beispielsweise mit einer 3D-Kamera, die das Objekt von der Vorderseite aufnimmt, erzeugt. Eine 3D-Kamera umfasst beispielsweise zwei (handelsübliche) Kameras, die in einem Abstand zueinander angeordnet sind, der einem typischen Augenabstand eines Menschen entspricht. Gemäß einem weiteren Aspekt kann das Objekt jedoch auch vollständig dreidimensional dargestellt werden, d.h. dass beispielsweise ein 360° Rundumblick um das Objekt möglich ist. Hierzu ist zumindest eine weitere 3D-Kamera vorteilhaft, die die Rückseite des Objekts aufnimmt. Alternativ oder ergänzend kann auch eine 3D-Kamera einen 360° Scan des Objekts vornehmen, indem die 3D-Kamera auf einer oder mehreren Kreisbahnen oder eine Helix um das Objekt herumfährt und somit aus (nahezu) jedem möglichen Blickwinkel auf das Objekt eine 3D Ansicht erhält.

Weitere Ausführungsbeispiele zeigen, dass beispielsweise bei der Überlagerung der Datenbrille mit dem Gesicht- bzw. der Augenpartie aus den Überlagerungsbilddaten, markante Stellen in den Überlagerungsbilddaten im Gesicht wie z.B. die Augen oder der Mund an einen Gemütszustand der Person angepasst werden kann. So kann durch nach oben zeigende Mundwinkel auf ein Lachen der Person geschlossen werden, so dass auch die eingefügte Augenpartie lachende, also beispielsweise leicht zusammengekniffene Augen darstellt. Diese Modifikation wird z.B. mittels eines Bildbearbeitungsalgorithmus auf statische Überlagerungsbilddaten angewendet, so dass die statischen Überlagerungsbilddaten dynamisch wirken. Weitere Ausführungsbeispiele zeigen, dass eine Mehrzahl von Überlagerungsbilddaten vorgehalten bzw. gespeichert sind, wobei beispielsweise durch einen Vergleich der aktuellen Aufnahme des Munds mit einem Mund aus den gespeicherten Überlagerungsbilddaten eine passende zu überlagernde Augenpartie oder ein passendes Gesicht gewonnen wird.

Ausführungsbeispiele der vorliegenden Erfindung werden nachfolgend unter Bezugnahme auf die beiliegenden Zeichnungen näher erläutert. Es zeigen:
- Fig. 1: eine schematische Darstellung eines herkömmlichen Ansatzes zur Herstellung, Übertragung und Darstellung eines stereoskopischen Films umfassend eine Vielzahl von Einzelbildern;
- Fig. 2: eine schematische Darstellung einer Vorgehensweise zur Herstellung, Übertragung und Darstellung eines stereoskopischen Films mit aus einer 3D-Engine erzeugten Einzelmodellen;
- Fig. 3: schematisch die Vorgehensweise zur Entfernung des Hintergrunds aus einer Szene gemäß einem Ausführungsbeispiel, wobei Fig. 3(a) die anfänglich aufgenommene Szene zeigt, und wobei Fig. 3(b) die Szene ohne Hintergrund zeigt;
- Fig. 4: ein Flussdiagramm eines Ausführungsbeispiels des Verfahrens gemäß Ausführungsbeispielen zum Erzeugen von Daten für eine dreidimensionale Darstellung zumindest eines Teils eines Objekts;
- Fig. 5: ein Flussdiagramm eines Ausführungsbeispiels, bei dem das 3D-Modell unter Verwendung zumindest einer ersten 3D-Aufnahme und einer zweiten 3D-Aufnahme des Objekts aus jeweils unterschiedlichen, sich zumindest teilweise überlappenden Positionen erzeugt wird;
- Fig. 6: ein Flussdiagramm, welches ein Ausführungsbeispiel zur Veränderung eines menschlichen Gesichts darstellt;
- Fig. 7: ein Flussdiagramm eines Ausführungsbeispiels des beschriebenen Verfahrens zum Erzeugen einer dreidimensionalen Darstellung zumindest eines Teils eines Objekts, wie es beispielsweise durch das anhand der Fig. 2 beschriebene System durchgeführt wird;
- Fig. 8: ein schematisches Blockdiagramm der Vorrichtung zur Erzeugung eines Modells von einem Objekt mit Überlagerungsbilddaten in einer virtuellen Umgebung;
- Fig. 9a: eine schematische Darstellung des Bilderfassungselements in der Initialisierungsphase;
- Fig. 9b: eine schematische Darstellung des Bilderfassungselements in einem Betriebsmodus;
- Fig. 10a: eine schematische Darstellung des Modells von dem Objekt ohne Überlagerungsbilddaten;
- Fig. 10b: eine schematische Darstellung des Modells von dem Objekt mit Überlagerungsbilddaten;
- Fig. 11: eine schematische Darstellung eines bevorzugten Ausführungsbeispiels eines virtuellen Konferenzraums; und
- Fig. 12: ein schematisches Blockdiagramm eines Verfahrens zur Erzeugung eines Modells von einem Objekt mit Überlagerungsbilddaten in einer virtuellen Umgebung.

In der nachfolgenden Beschreibung der bevorzugten Ausführungsbeispiele werden gleiche oder gleichwirkende Elemente mit den gleichen Bezugszeichen versehen.

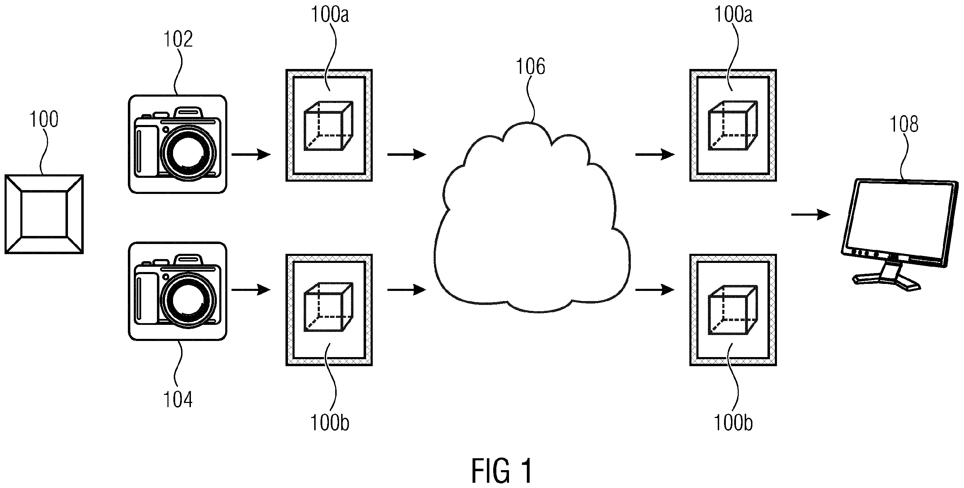

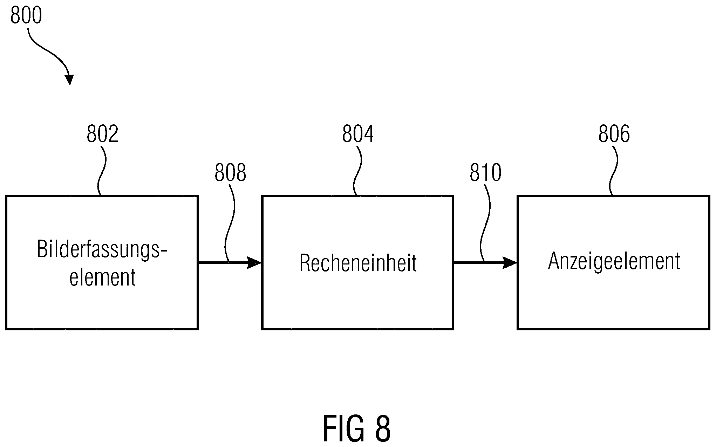

Fig. 8 zeigt ein schematisches Blockdiagramm einer Vorrichtung 800 zur Erzeugung eines Modells von einem Objekt mit Überlagerungsbilddaten in einer virtuellen Umgebung. Die Vorrichtung 800 weist ein Bilderfassungselement 802, eine Recheneinheit 804 und ein Anzeigeelement 806 auf. Das Bilderfassungselement 802 ist ausgebildet, einen Bilddatenstrom 808 von dem Objekt zu erzeugen und an die Recheneinheit 804 zu senden. Der Bilddatenstrom kann eine Folge von Einzelbildern, beispielsweise ein (Life- oder Echtzeit)-Video bzw. Video Stream sein. Die Recheneinheit 804 ist ausgebildet, aus dem Bilddatenstrom 808 ein Modell des Objekts aus einer realen Umgebung zu extrahieren, das extrahierte Modell in die virtuelle Umgebung einzufügen und Überlagerungsbilddaten zumindest einem Teil des Modells zu überlagern, um das Modell 810 von dem Objekt mit Überlagerungsbilddaten in der virtuellen Umgebung zu erzeugen und an das Anzeigeelement zu senden. Das Anzeigeelement 806 ist ferner ausgebildet, das Modell 810 von dem Objekt mit Überlagerungsbilddaten in der virtuellen Umgebung anzuzeigen. Vorteilhafte Ausgestaltungen zur Erzeugung und ggf. der Übertragung des Modells von dem Objekt sind nachfolgend Bezug nehmend auf die Fig. 1 bis 7 gezeigt. Fig. 8 bis 12 zeigen Ausführungsbeispiele zur Darstellung des Modells mit Überlagerungsbilddaten in der virtuellen, z.B. computergenerierten, Umgebung.

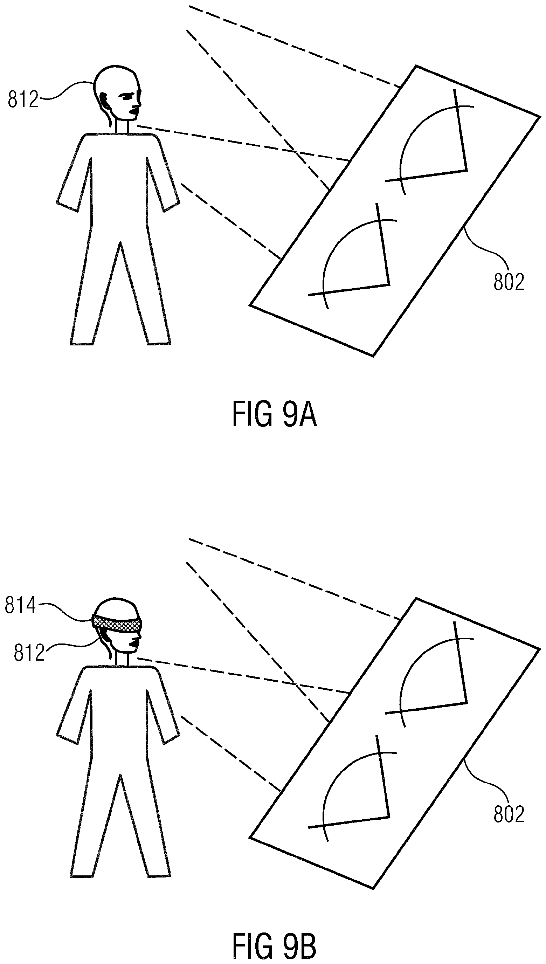

Fig. 9a zeigt eine schematische Darstellung des Bilderfassungselements 802 in einer Initialisierungsphase. In der Initialisierungsphase ist das Bilderfassungselement 802 ausgebildet, zumindest einen Teil des Objekts 812 zu erfassen, um die Überlagerungsbilddaten zu erzeugen. Fig. 9b zeigt das Bilderfassungselement 802 in einem Betriebsmodus, in dem das Bilderfassungselement ausgebildet ist, den Bilddatenstrom 808 von dem Objekt 812 zu erzeugen. Das Objekt 812 ist hier schematisch als Person dargestellt, bei der in der Initialisierungsphase in Fig. 9a das Gesicht bzw. die Augenpartie der Person gescannt und als Überlagerungsbilddaten gespeichert werden. Die Überlagerungsbilddaten können statisch (Einzelbild) oder dynamisch ([kurze] Videosequenz) sein.

Im Betriebsmodus (vgl. Fig. 9b) hat das Objekt 812, hier wieder eine Person, gemäß Ausführungsbeispielen eine Datenbrille 814 aufgesetzt, die die virtuelle Umgebung anzeigt. Das Bilderfassungselement 802 nimmt nun das Objekt 812, beispielsweise den Kopf oder Oberkörper der Person auf und erzeugt ein Modell des Kopfs oder des Oberkörpers der Person in der virtuellen Umgebung. Das Modell zeigt diesem Zeitpunkt jedoch immer noch die Datenbrille 814 auf dem Kopf der Person. Die Datenbrille kann die Recheneinheit mittels der Überlagerungsbilddaten, die beispielsweise in der Initialisierungsphase erhalten wurden, überlagern bzw. texturieren, so dass z.B. die Augenpartie oder das Gesicht des Modells aus den Überlagerungsbilddaten und der restliche Teil des Modells aus dem Bilddatenstrom erzeugt wird.

Gemäß Ausführungsbeispielen ist die Recheneinheit ausgebildet, eine aktuelle Erscheinungsform des Objekts 812 zu bestimmen und die Überlagerungsbilddaten basierend auf der bestimmen aktuellen Erscheinungsform anzupassen. Die Erscheinungsform ist beispielsweise ein Lächeln oder ein anderer Gesichtsausdruck einer Person. Dieses kann aus den Gesichtszügen, z.B. den Mundwinkeln bestimmt werden. Statische Überlagerungsbilddaten, beispielsweise ein Einzelbild, können nun derartig manipuliert werden, dass die Augenpartie in den Überlagerungsbilddaten an den aktuellen Gesichtsausdruck angepasst ist. Somit kann mittels Bildbearbeitungsalgorithmen die Augenpartie derart bearbeitet werden, dass diese leicht zusammengekniffen wirken, um ein Lächeln darzustellen. Somit kann eine Dynamik in den Überlagerungsbilddaten erzeugt werden. Gemäß weiteren Ausführungsbeispielen kann auch eine Mehrzahl von Überlagerungsbilddaten, beispielsweise von verschiedenen Gesichtsausdrücken angelegt werden. So kann die aktuelle Position der Mundwinkel der Person mit der Position der Mundwinkel in den Überlagerungsbilddaten verglichen werden. Somit ist es möglich, das Überlagerungsbild, das den aktuellen Gesichtsausdruck bestmöglich wiedergibt, auszuwählen und das ganze Gesicht oder auch nur die Augenpartie des Modells mit den Überlagerungsbilddaten zu überlagern. So kann auch hier aus den statischen Überlagerungsbilddaten eine Dynamik in den Überlagerungsbilddaten erzeugt werden. In anderen Worten kann die Recheneinheit Überlagerungsbilddaten aus einer Mehrzahl von Überlagerungsbilddaten basierend auf der bestimmten aktuellen Erscheinungsform auswählen und die ausgewählten Überlagerungsbilddaten dem Teil des Objekts überlagern.

In anderen Worten kann das Bilderfassungselement ausgebildet sein, in der Initialisierungsphase eine Augenpartie oder ein Gesicht einer Person als Objekt zu scannen und als Überlagerungsbilddaten zu speichern, wobei die Recheneinheit ausgebildet ist, in dem Betriebsmodus eine von der Person aufgesetzte Datenbrille mit den in der Initialisierungsphase erhaltenen Überlagerungsbildern zu überlagern. Somit kann die Recheneinheit die Augenpartie oder das Gesicht in den Überlagerungsbilddaten basierend auf einem Gemütszustand der Person anpassen und die angepassten Überlagerungsbilddaten der Person zu überlagern. Darüber hinaus kann die Bildaufnahmeeinheit eine Mehrzahl von Überlagerungsbilddaten anlegen, wobei die Recheneinheit ausgebildet ist, den Gemütszustand anhand eines Vergleichs einer aktuellen Position der Mundwinkel der Person mit einer Position der Mundwinkel in der Mehrzahl von Überlagerungsbilddaten zu vergleichen und das Überlagerungsbild, das den aktuellen Gesichtsausdruck bestmöglich wiedergibt, auszuwählen.

Gemäß Ausführungsbeispielen kann die aktuelle Erscheinungsform des Objekts 30 bis 60 mal pro Sekunde, 35 bis 55 mal pro Sekunde oder 40 bis 50 mal pro Sekunde bestimmt werden. Vorteilhafterweise wird die aktuelle Erscheinungsform des Objekts, beispielsweise der Gesichtsausdruck einer Person, für jedes Bild bzw. jeden Frame des Bilddatenstroms, als Mittelwert oder Median aus einer Mehrzahl von Bildern oder Frames des Bilddatenstroms bestimmt. Demnach kann auch der Bilddatenstrom 30 bis 60 Bilder pro Sekunde, 35 bis 55 Bilder pro Sekunde oder 40 bis 50 Bilder pro Sekunde oder ein Vielfaches derselben aufweisen. Diese vergleichsweise hohe Bildwiederholfrequenz ermöglicht eine Aktualisierung des Modells in der virtuellen Umgebung in Echtzeit, d.h., dass, eine ausreichende Übertragungsgeschwindigkeit vorausgesetzt, zwischen dem Objekt in der realen Umgebung und dem Objekt in der virtuellen Umgebung kein für den Menschen sichtbarer Unterschied zu erkennen ist. Hinsichtlich der Fig. 1 bis 7 sind Ausführungsbeispiele gezeigt, die die Datenmenge des Modells gegenüber bekannten Verfahren zur Erzeugung der Modelle reduzieren, womit auch bei einer geringen Bandbreite eine ausreichende Übertragungsgeschwindigkeit gewährleistet ist.

Gemäß einem Ausführungsbeispiel beträgt die Latenz bzw. Verzögerung des Objekts in der virtuellen Umgebung im Vergleich zum Objekt in der realen Umgebung weniger als 50 ms, weniger als 30 ms oder weniger als 20 ms.

Fig. 9a und 9b zeigen beispielhaft eine 3D-Kamera als Bilderfassungselement 802. Zur Erstellung einer vollständigen 3D-Ansicht, d.h. einer Ansicht, die einen 360° Rundumblick um das Modell des Objekts ermöglicht, kann die 3D-Kamera um das Objekt 812 herumfahren und kontinuierlich Aufnahmen erzeugen. Alternativ ist auch die Anordnung einer weiteren 3D-Kamera möglich, die beispielsweise gegenüber der ersten 3D-Kamera angeordnet ist und das Objekt 812 aus zwei sich unterscheidenden Perspektiven aufnimmt. Weitere 3D-Kameras können einen höheren Detaillierungsgrad bzw. eine verbesserte 3D-Wirkung des Objekts 812 bzw. des Modells desselben erzeugen. Dies gilt ebenso für die Erzeugung der Überlagerungsbilddaten wie auch für die Erzeugung des Bilddatenstroms des Objekts. Alternativ sind auch weitere Formen von Überlagerungsbilddaten denkbar. So ist es möglich, anstelle der Augenpartie beispielsweise das Gesicht einer (berühmten) Person über das Gesicht des Modells zu überlagern. Alternativ ist es auch denkbar, das eigene Gesicht bzw. die Augenpartie mit einer Maske zu verhüllen, um beispielsweise in einem Chatroom seine Anonymität zu bewahren. Die Recheneinheit ist demnach ausgebildet, ein dreidimensionales Modell des Objekts mit Überlagerungsdaten aus dem Bilddatenstrom zu erzeugen, wobei das Anzeigeelement ausgebildet ist, das 3D-Model von dem Objekt mit Überlagerungsbilddaten in der virtuellen Umgebung anzuzeigen.

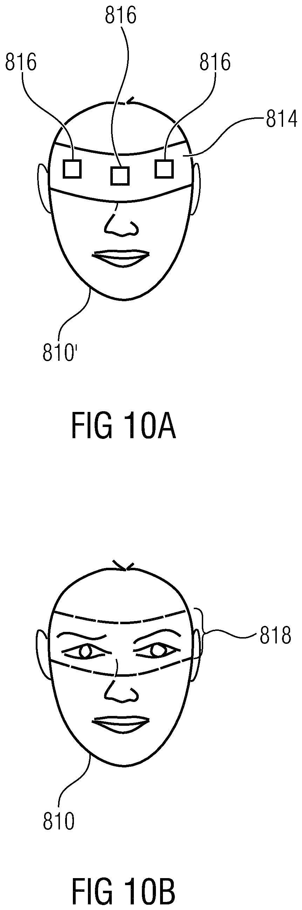

Fig. 10a zeigt eine schematische Darstellung des Modells 810' ohne Überlagerungsbilddaten gemäß einem Ausführungsbeispiel, wobei das Modell das Gesicht einer Person repräsentiert. In dem Modell trägt die Person ferner die Datenbrille 814, die gemäß Ausführungsbeispielen mit Markern 816 bestückt ist, die eine exakte Lokalisierung bzw. Bestimmung der Position der Datenbrille 814 auf dem Kopf der Person ermöglichen. Die Marker sind beispielsweise LEDs oder Reflektoren.

Fig. 10b zeigt eine schematische Darstellung des Modells 810 mit Überlagerungsbilddaten 818. Gemäß der Darstellung in Fig. 10b können die Überlagerungsbilddaten die Augenpartie der Person sein, die den Bereich der Datenbrille 814 ersetzen. Ferner ist es auch möglich, wie bereits beschrieben, das gesamte Gesicht oder einen alternativen bzw. beliebigen Teil des Objekts zu ersetzen.

Alternativ oder ergänzend zu dem Einsatz von Markern können auch markante Punkte am Objekt, beispielsweise die Nase und/oder der Mund einer Person als Referenz für die Position oder die Ausrichtung der Überlagerungsbilddaten herangezogen werden. So kann anhand der Nase und/oder des Munds die Kopfpose durch die Recheneinheit erkannt werden, so dass die überlagerte Augenpartie relativ zur Kopfpose ausgerichtet wird und an die vorgesehene Stelle eingefügt wird.

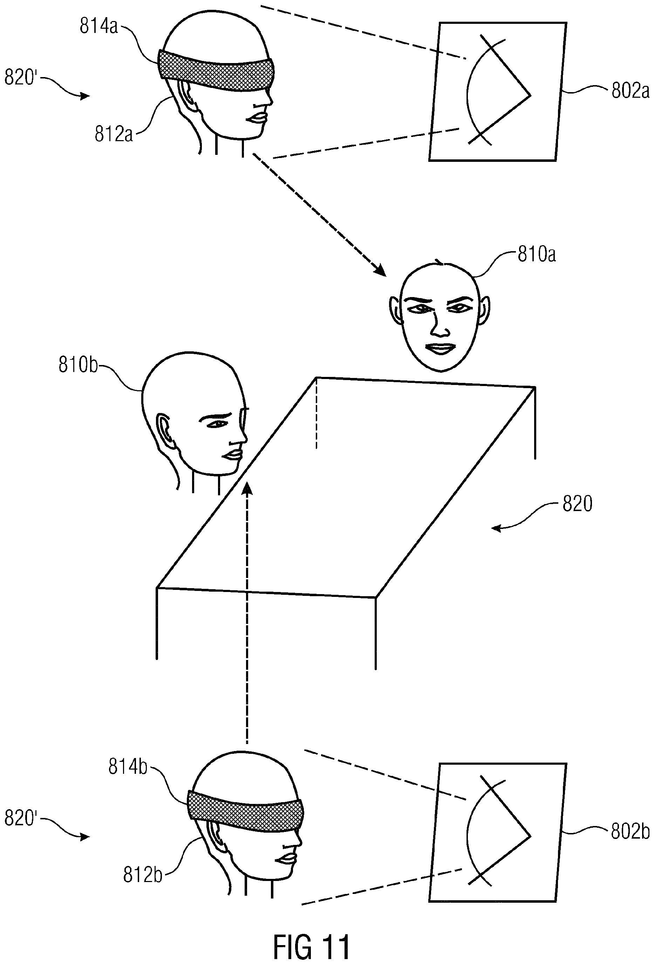

Fig. 11 zeigt eine schematische Darstellung einer bevorzugten Ausführungsform der vorliegenden Erfindung. Oben und unten in Fig. 11 ist jeweils ein Objekt 812a, 812b, hier der Kopf einer Person, in einer realen Umgebung 820' gezeigt. Dort wird die Person mittels des Bilderfassungselements 802a, 802b erfasst, um einen Bilddatenstrom vom Kopf der Person zu erzeugen und an die Recheneinheit zu senden. Die Recheneinheit kann nun, basierend auf dem Bilddatenstrom, ein Modell des Objekts 812a, 812b erzeugen und beispielsweise die Datenbrille 814a, 814b mit der Augenpartie der Person überlagern, so dass die Recheneinheit das Modell 810a, 810b mit Überlagerungsbilddaten erzeugt. Gemäß Ausführungsbeispielen können die Modelle mit den Überlagerungsbilddaten an einen zentralen Server geschickt werden, der ausgebildet ist, eine gemeinsame virtuelle Umgebung zu schaffen und die Modelle 810a, 810b in die gemeinsame virtuelle Umgebung 820 zu integrieren. Demnach ist gemäß diesem Ausführungsbeispiel die Recheneinheit auf zwei Systeme verteilt.

Entgegen der Darstellung in Fig. 11 können die Modelle 810a, 810b derart ausgebildet sein, dass eine 360° Rundumansicht des Modells möglich ist. So kann beispielsweise der Nutzer 812a mittels eines Eingabegeräts seinen Blickwinkel in der virtuellen Umgebung 820 unabhängig von der Person 812b einstellen. So erhält der Nutzer 812a eine individuelle Ansicht eines externen Beobachters (third person view) auf das Modell von sich und der Person 812b in der virtuellen Umgebung 820. Somit können sich die Personen 812a und 812b virtuell gegenübersitzen und ihr Meeting in dem virtuellen Konferenzraum abhalten. Ferner ist es auch möglich, Anschauungsobjekte als Modell bzw. Hologramm in den virtuellen Konferenzraum zu integrieren. So kann beispielsweise von einem dritten Standort das (originalgetreue) Modell eines Objekts, beispielsweise eines Autos, in den Konferenzraum integriert werden, deren Orientierung, Größe und/oder Detaillierungsgrad von jeder der beiden Personen 812a, 812b individuell und unabhängig voneinander angepasst werden kann.

Ausführungsbeispiele zeigen, dass sowohl der Bilddatenstrom als auch die Überlagerungsbilddaten von einer Kamera erzeugt bzw. aufgenommen werden. Somit kann dem Nutzer ein verbesserter Realitätseindruck vermittelt werden, als bei computergenerierten Avatars oder Avatars, bei denen beispielsweise nur der Oberkörper aufgenommen wird und computeranimierte Beine eingefügt werden, um dem Avatar in der virtuellen Welt die Möglichkeit zu geben, sich zu bewegen. Das aufgenommene Kamerabild kann mittels der in Fig. 1 bis 7 beschriebenen Vorgehensweise in ein 3D Modell überführt werden um eine Reduzierung der zu übertragenen Datenmenge zu ermöglichen. Die Datenreduzierung ist jedoch nicht auf dieses Verfahren beschränkt und darüber hinaus ferner in Gänze optional, da auch die unkomprimierten aufgenommenen Kamerabilder übermittelt werden können. Insbesondere für den Bilddatenstrom ist eine Komprimierung des Videos bzw. der Einzelbilder des Bilddatenstroms vorteilhaft.

Die Überlagerungsbilddaten können bereits im Vorhinein aufgenommen und in der Recheneinheit gespeichert werden. Da ein Anwendungsbereich der beschriebenen Vorrichtung ein virtueller Meeting- bzw. Konferenzraum ist, kann die Recheneinheit dezentral bei den Teilnehmern der Konferenz angeordnet sein. Um die Überlagerungsbilddaten effizient zu nutzen, können diese z.B. einmalig zwischen den Recheneinheiten aller Teilnehmer ausgetauscht bzw. an diese übersendet werden. Hierfür können die aufgenommenen Bilder bzw. Fotos oder Videosequenzen der Überlagerungsbilddaten verwendet werden, ohne diese in ein entsprechendes Modell umzuwandeln.

Um die aufgenommenen Objekte in dem Bilddatenstrom und/oder den Überlagerungsbilddaten von Ihrem realen Hintergrund zu separieren, können diese z.B. in einer "Green-Box" (vor einem grünen oder einem blauen Hintergrund) aufgenommen werden, so dass das Objekt mittels farbbasierter Bildfreistellung (engl. chroma keying) in die virtuelle Umgebung eingefügt werden kann.

Ausführungsbeispiele zeigen ferner, dass die gezeigte Vorrichtung zur Visualisierung von kosmetischen Korrekturen verwendet werden kann. So können als Überlagerungsbilddaten z.B. unterschiedlich geschminkte Lippen gespeichert sein, so dass der Nutzer aus dem Set an gespeicherten Überlagerungsbilddaten die entsprechend geschminkten Lippen seiner Wahl seinen eigenen Lippen überlagern kann. Somit können Nutzer einen besseren Eindruck erhalten, ob die gewählte Lippenstiftfarbe zu dem restlichen Outfit passt, da sie beides in Kombination sehen. Um die Überlagerungsbilddaten zu erzeugen, kann der Nutzer einmalig im Vorhinein bzw. in einer Initialisierungsphase verschiedene Lippenstifte auftragen und die Überlagerungsbilddaten als Aufnahme von seinen eigenen Lippen speichern. Darüber hinaus kann der Nutzer sich somit auch in der virtuellen Welt und somit z.B. für eine (berufliche) Besprechung schminken, ohne im echten Leben die Zeit für das Schminken aufzuwenden. Ergänzend oder alternativ können beispielsweise von den Herstellern der Lippenstifte entsprechende Muster als Überlagerungsbilddaten bereitgestellt werden. Die Lippen wurden hier beispielhaft ausgewählt, das Prinzip kann jedoch für jegliche kosmetische Korrekturen, wie beispielsweise auch eine andere Frisur oder Haarfarbe verwendet werden. Ebenso kann somit auch eine vorhandene Lese- bzw. Sehbrille retuschiert werden.

Ein ähnliches Prinzip kann für die generelle Veränderung von (Gesichts-) Attributen angewendet werden. So können die Überlagerungsbilddaten derart (mit dem Computer) bearbeitet werden, dass bestimmte Attribute des Nutzers verändert werden. Dieses Prinzip kann z.B. in der Schönheitschirurgie verwendet werden, um dem Nutzer eine Vorstellung zu vermitteln, wie er nach einem potentiellen Eingriff aussieht.

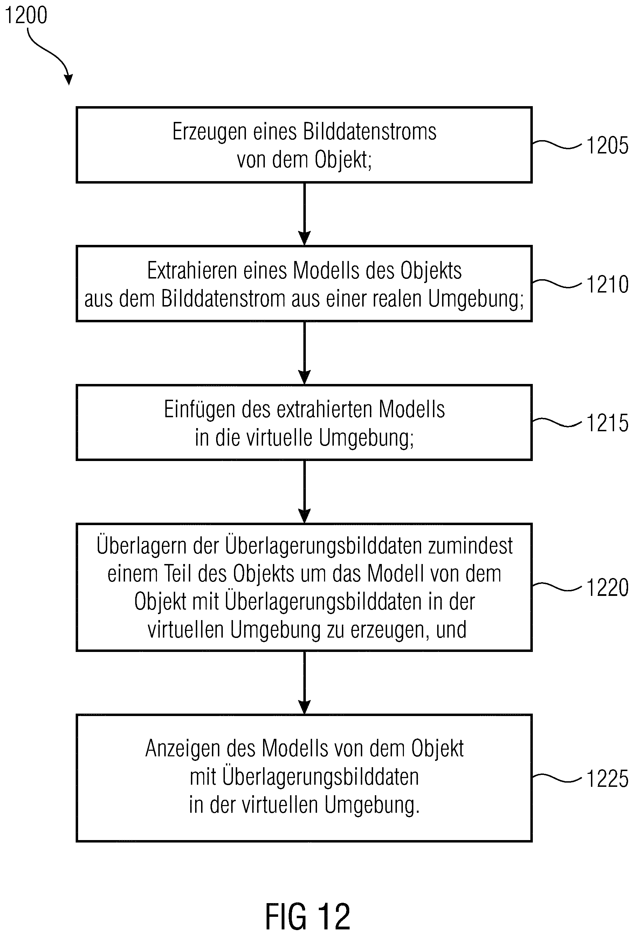

Fig. 12 zeigt ein schematisches Blockdiagramm eines Verfahrens 1200 zur Erzeugung eines Modells von einem Objekt mit Überlagerungsbilddaten in einer virtuellen Umgebung. Das Verfahren 1200 weist einen Schritt 1205 mit Erzeugen eines Bilddatenstroms von dem Objekt, einen Schritt 1210 mit Extrahieren eines Modells des Objekts aus dem Bilddatenstrom aus einer realen Umgebung, einen Schritt 1215 mit Einfügen des extrahierten Modells in die virtuelle Umgebung, einen Schritt 1220 mit Überlagern der Überlagerungsbilddaten zumindest einem Teil des Objekts, um das Modell von dem Objekt mit Überlagerungsbilddaten in der virtuellen Umgebung zu erzeugen und einen Schritt 1225 mit Anzeigen des Modells von dem Objekt mit Überlagerungsbilddaten in der virtuellen Umgebung auf.

Nachfolgend werden Ausführungsformen insbesondere zur Erstellung des Modells des Objekts hinsichtlich Fig. 1 bis Fig. 7 beschrieben. Das Modell weist gemäß Ausführungsbeispielen eine reduzierte Datenmenge bei der Speicherung oder Übertragung des Modells auf. Somit können die vorgenannten Ausführungsbeispiele auch bei geringen Übertragungsraten bzw. Bandbreiten in Echtzeit ausgeführt werden. Die nachfolgenden Ausführungsformen sind jedoch nur beispielhaft zu sehen und beschränken die Erstellung des Modells nicht auf dieselben. In anderen Worten können die Modelle auch in alternativen Verfahren erstellt werden.

Es sind verschiedene Ansätze bekannt, um eine dreidimensionale Darstellung eines Objekts, beispielsweise in Form einer Sequenz von Einzelbildern oder eines 3D-Films zu erzeugen und anzuzeigen. Fig. 1 zeigt eine schematische Darstellung eines herkömmlichen Ansatzes zur Herstellung, Übertragung und Darstellung eines stereoskopischen Films umfassend eine Vielzahl von Einzelbildern. Der Einfachheit halber ist in Fig. 1 als darzustellendes Objekt ein Würfel 100 dargestellt. Eine erste Kamera 102 erzeugt eine erste Aufnahme 100a des Würfels aus einer ersten Perspektive, und eine zweite Kamera 104 erzeugt eine zweite Aufnahme 100b des Würfels aus einer zweiten Perspektive, die sich von der ersten Perspektive unterscheidet. Mit anderen Worten werden die Aufnahmen 100a und 100b des Würfels 100 aus verschiedenen Blickwinkeln erzeugt. Die so erzeugten und die empfangenen Einzelbilder 100a, 100b werden einer geeigneten stereoskopischen Wiedergabeeinheit 108, beispielsweise einem Monitor, zur Darstellung bereitgestellt. Anstelle der Kameras 102 und 104 kann auch eine gemeinsame 3D-Kamera eingesetzt werden, welche ebenfalls zwei Aufnahmen des Objekts 100 erzeugt, die dann auf die oben beschriebene Art und Weise an den Monitor 108 zur Darstellung übertragen werden.

Der anhand der Fig. 1 beschriebene, herkömmliche Ansatz ist nachteilhaft, da die über das Übertragungsmedium 106 zu übertragende Datenmenge von mindestens zwei Bildern 100a und 100b sehr groß ist, was mit einer entsprechend hohen Datenübertragungszeit einhergeht. Selbst bei einer Komprimierung der zweidimensionalen Aufnahmen oder Bilder 100a, 100b ist die erforderliche Dauer für die Komprimierung der Daten groß, so dass die Gesamtübertragungszeit von der Stelle, an der die Aufnahme des Objekts 100 erzeugt wird, bis zur Stelle, an der die dreidimensionale Wiedergabe erfolgen soll, sehr hoch ist. Beispielhaft sei eine stereoskopische Aufnahme des Würfels 100 angenommen, und bei der anhand der Fig. 1 beschriebenen Vorgehensweise ist für die Übertragung der erforderlichen Daten zur Darstellung eines Einzelbilds des Würfels am Monitor 108 unter Zugrundelegung einer Bildgröße von 1024 x 768 Pixel folgender Speicherplatz erforderlich: 2 Bilder x 1024(X-Wert) x 768(Y-Wert) x 3(RGB-Farb-Wert) = 4718592 Byte.

Diese große Datenmenge führt zu den oben angesprochenen hohen Übertragungszeiten, und macht die Übertragung von Bewegtbildern eines sich bewegenden Objekts in dreidimensionaler Ausgestaltung nahezu unmöglich, da hierfür eine Übertragung von bis zu 30 Frames pro Sekunde erforderlich ist, wobei jeder Frame die oben angegebene Datenmenge aufweist. Somit ist eine solche Übertragung eines sich bewegenden Objekts 100, dessen Bewegung dreidimensional an der Empfangsseite 108 dargestellt werden soll, nur mit einer hohen Zeitverzögerung möglich, so dass insbesondere ein Livestream oder Ähnliches gar nicht möglich ist. Auch eine Übertragung eines 3D-Films ist aufgrund der erforderlichen Bandbreite nahezu unmöglich.

Die gerade erwähnte Übertragung eines Livestreams in dreidimensionaler Qualität bzw. die Übertragung einer dreidimensionalen Live-Sequenz ist beispielsweise im Zusammenhang mit der Aufnahme von Menschen und Umgebungsräumen erwünscht. Die Aufnahme von Menschen und Umgebungsräumen unter Verwendung von 3D-Kameras und die Wiedergabe als 3D-Film birgt das oben erwähnte Problem der immensen Datenmengen, die im Internet nicht übertragbar sind, was daher rührt, dass die Daten als herkömmliche Sequenzen aus 2D-Bildern gespeichert und übertragen werden müssen. Im Stand der Technik bekannte Ansätze beschäftigen sich mit der Kodierung und Übertragung von 2D-Bilddaten aus Videoaufnahmen, jedoch ist die Datenmenge und die damit einhergehende Kodierungszeit für diese zweidimensionale Lösung im Zusammenhang mit 3D-Bilddaten zu umfangreich, so dass das grundlegende Problem der Übertragung der erforderlichen Daten zur dreidimensionalen Darstellung eines Objekts, beispielsweise auch als Bewegtbild, bleibt.

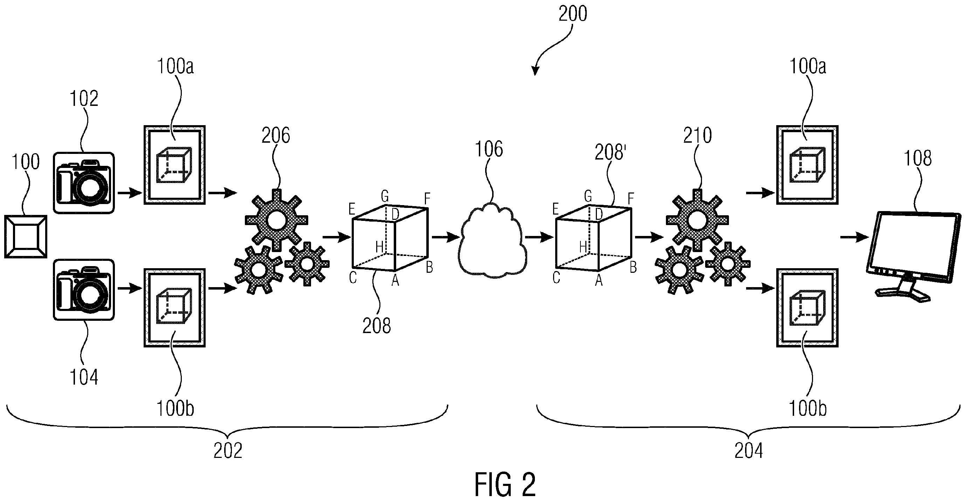

Die Fig. 2 zeigt eine schematische Darstellung einer Vorgehensweise zur Herstellung, Übertragung und Darstellung eines stereoskopischen Films mit aus einer 3D-Engine erzeugten Einzelmodellen. Ähnlich wie in Fig. 1 wird auch in Fig. 2 die dreidimensionale Abbildung eines Würfels 100 als Grundlage für die Erläuterung des Ansatzes gewählt. Fig. 2 zeigt eine schematische Gesamtdarstellung des Systems 200 gemäß Ausführungsbeispielen zur Erzeugung einer dreidimensionalen Darstellung zumindest eines Teils eines Objekts, nämlich des Würfels 100. Das System 100 umfasst das bereits anhand der Fig. 1 beschriebene Übertragungsmedium 106, welches zwischen einer Senderseite 202 und einer Empfängerseite 204 angeordnet ist. Elemente, die bereits anhand der Fig. 1 beschrieben wurden, sind in der Fig. 2 mit den gleichen Bezugszeichen versehen und werden nicht nochmals im Detail erläutert.

Die in Fig. 2 gezeigte Senderseite 202 kann beispielsweise eine Vorrichtung zum Erzeugen von Daten für eine dreidimensionale Darstellung zumindest eines Teils eines Objekts umfassen, wobei die Vorrichtung gemäß dem gezeigten Ausführungsbeispiel eine 3D-Engine 206 umfasst, die in Fig. 2 schematisch dargestellt ist, und die als Eingang die 3D-Aufnahme umfassend die zwei Bilder 100a und 100b des Würfels 100 erhält. Basierend auf der 3D-Aufnahme erzeugt die 3D-Engine ein Modell 208 des Würfels 100 umfassend die im Raum an unterschiedlichen Positionen angeordneten Scheitelpunkte A bis H. Abhängig davon, aus welchen unterschiedlichen Perspektiven der Würfel 100 aufgenommen wird, umfasst das durch die 3D-Engine 206 erzeugte 3D-Modell entweder das gesamte Objekt, also den gesamten Würfel 100 oder nur einen Teil des Würfels 100. Bei dem in Fig. 2 dargestellten Ausführungsbeispiel sei angenommen, dass lediglich eine einzelne 3D-Aufnahme des Würfels 100 aus einer Perspektive existiert, so dass das 3D-Modell entsprechend dieser Ausführungsform lediglich die Vorderseite und die Oberseite des Würfels darstellen würde, und entsprechend die Scheitelpunkte A bis G existieren.

Bei anderen Ausführungsbeispielen kann vorgesehen sein, den Würfel aus einer zweiten Perspektive aufzunehmen, die sich von der ersten Perspektive unterscheidet, so dass auch dessen Rückseite und gegebenenfalls auch dessen Unterseite als Modell abgebildet werden können, in diesem Fall würde die 3D-Engine 206 auf Grundlage der Eingangsdaten, nämlich auf Grundlage der zwei 3D-Aufnahmen, ein 3D-Modell des Würfels 208 erzeugen, welches die Scheitelpunkte A bis H umfasst, also ein 3D-Modell, welches von allen Seiten betrachtet werden kann.

Gemäß Ausführungsbeispielen ist die 3D-Engine 206 wirksam, um das 3D-Modell 208 des Würfels 100 in Form der Scheitelpunkte A bis H und als Farbwerte, die den entsprechenden Scheitelpunkten zugeordnet sind, zu definieren. Die durch die Kamera 102, 104 aufgenommene Szene, welche beispielsweise den Würfel 100 umfasst, liefert am Ausgang der 3D-Engine 206 ein Einzelbild umfassend Farbwerte und Tiefeninformationen. Die Farbwerte bestehen jeweils, gemäß einem Ausführungsbeispiel, aus einem Byte für Rot, einem Byte für Grün und einem Byte für Blau (RGB-Farbwerte), also aus 3 Bytes insgesamt. Die Tiefeninformationen umfassen die X-, Y- und Z-Werte für die Scheitelpunkte des 3D-Modells im dreidimensionalen Raum. Gemäß Ausführungsbeispielen können die X-, Y- und Z-Werte jeweils als Gleitkommazahlen mit einfacher Genauigkeit gespeichert werden, mit einer Länge von beispielsweise 32 Bit. Die Folge von X-, Y- und Z-Werten wird als Scheitelpunkte bezeichnet, und die Menge aller Scheitelpunkte des 3D-Modells 208 wird als Punktwolke bezeichnet.

Vergleicht man die Vorgehensweise gemäß dem Stand der Technik, wie sie anhand der Fig. 1 erläutert wurde, und den oben beschriebenen Ansatz, so ergibt sich eine massive Datenreduzierung aufgrund der Darstellung des Objekts 100 in Form eines 3D-Modells, welches über die Scheitelpunkte und Farbwerte definiert ist. Wie oben bereits erläutert wurde, erzeugen herkömmliche Ansätze einen zu übertragenen Datensatz für einen Würfel, der eine Größe von 4718592 Byte aufweist, unter Zugrundelegung von Bildern mit einer Auflösung von 1024x768 Pixel, so dass sich bei zwei Bildern und drei Farbwerten die gerade genannte Bytezahl ergibt. Im Gegensatz hierzu ist der obige Ansatz von deutlichem Vorteil, da eine massive Reduzierung der Datenmenge erreicht wird, da beispielsweise bei der in Fig. 2 dargestellten Vorgehensweise, unter der Annahme, dass das 3D-Modell 208 eine vollständige Abbildung des Würfels 100 darstellt, nur 8 Scheitelpunkte ä 4 Byte Fließkommawert erforderlich sind, und jeweils 3 Byte als Farbwert, so dass als Datenmenge für einen Rahmen/ein Einzelbild zur Darstellung des 3D-Objekts 100 nur 8x4x3 Byte = 96 Byte erforderlich sind.

Hinsichtlich der Fig. 2 wird darauf hingewiesen, dass das dort gezeigte Beispiel der Erzeugung von Daten zur dreidimensionalen Darstellung eines Würfels 100 keine Einschränkung darstellt, tatsächlich kann es sich beim Objekt 100 um einen beliebigen Gegenstand mit beliebig komplexer Struktur handeln, beispielsweise auch um eine Darstellung einer Person oder einer Maschine. Die in Fig. 2 gezeigten 3D-Engines können z.B. durch Computersysteme realisiert sein, die ggf. für eine Erzeugung von 3D-Modellen hardwaretechnisch entsprechend ausgerüstet sind und auf denen entsprechende Software zur Ausführung vorgesehen ist.

Gemäß Ausführungsbeispielen ist die Vorrichtung 202 ausgebildet, um eine 3D-Aufnahme 100a, 100b des Objekts 100 wiederholt zu erzeugen, um Daten für eine Vielzahl von aufeinanderfolgenden Frames für die Übertragung über das Medium 106 bereitzustellen, um so auf der Empfängerseite 204 eine 3D-Livesequenz bzw. einen 3D-Film darzustellen. Um dies zu erreichen, werden gemäß Ausführungsbeispielen pro Sekunde durch die Vorrichtung 202 bis zu 30 Frames erzeugt, d.h. es werden bis zu 30 Einzelbilder von dem Objekt 100 aufgenommen. Jedes Einzelbild wird entsprechend den obigen Ausführungen über die 3D-Engine 206 unter Verwendung des 3D-Modells Kodiert, so dass jeder der 30 Frames pro Sekunde einen Datensatz enthält, der zum Zeitpunkt der Aufnahme die Scheitelpunkte und die den Scheitelpunkten zugeordneten Farbwerte des Objekts 100 enthält.

Die Vorrichtung 202 und das hierdurch implementierte Verfahren ist vorteilhaft, da eine Datenmenge, die über das Übertragungsmedium 106 übertragen ist, deutlich reduziert wird, wodurch sich auch die Übertragungszeit deutlich reduziert. Insofern ist die Zeit zur Berechnung der 3D-Modelle kürzer als die zur Komprimierung von Einzelbildern gemäß dem Stand der Technik erforderliche Zeit. Zusätzlich ermöglicht die vollständige Übertragung der 3D-Informationen über das 3D-Modell empfängerseitig die Möglichkeit, einen Blickpunkt auf das Objekt auf der Empfängerseite frei zu wählen, da die eigentlichen Bilder nach Übertragung der Daten des 3D-Modells empfängerseitig durch eine 3D-Engine zur Laufzeit erzeugt werden und zur Anzeige gebracht werden. Genauer gesagt werden gemäß Ausführungsbeispielen die Daten (der Datensatz), die das 3D-Modell 208, welches senderseitig erzeugt wurde, beschreiben, über das Übertragungsmedium 106 zu der Empfängerseite 204 übertragen, so dass die entsprechenden Daten, welche das 3D-Modell 208' beschreiben, auf der Empfängerseite 204 vorliegen. Diese Daten werden einer 3D-Engine 210 zugeführt, welche auf Grundlage des 3D-Modells die 3D-Aufnahme des Objekts im entsprechenden Frame/Rahmen, z.B. die zwei Aufnahmen 100a, 100b, erzeugt, die dann, wie im Stand der Technik, einem geeigneten Monitor 108 oder einer anderen geeigneten Anzeigevorrichtung zur dreidimensionalen Darstellung des Objekts auf Empfängerseite 204 bereitgestellt werden.

Gemäß Ausführungsbeispielen wird somit ein Ansatz gelehrt, bei dem eine Übertragung einer Sequenz von einzelnen 3D-Modellen durchgeführt wird, anstelle einer Übertragung einer Sequenz von einzelnen 2D-Bildern, wie es im Stand der Technik der Fall ist. Die 3D-Modelle 208 werden vor der Übertragung mit Hilfe der 3D-Engine 206 erzeugt, wobei die 3D-Engine beispielsweise aus den Bildern 100a, 100b Kanten erkennt und basierend auf den erkannten Kanten das 3D-Modell erzeugt. Beispielsweise kann die 3D-Engine 206 gemeinsame Bereiche in den Bildern 100a, 100b ermitteln, z.B. gemeinsame Kanten, die zu dem Objekt 100 gehören, um daraus das resultierende 3D-Modell bzw. 3D-Gitter (Mesh) des Objekts 100 zu ermitteln. Nach Übertragung wird das durch die Scheitelpunkte und Farbwerte beschriebene 3D-Modell durch die empfängerseitige 3D-Engine 210 wieder in die zwei Bilder 100a und 100b umgewandelt, um das 3D-Objekt aus verschiedenen Blickwinkeln mit den Einzelbildern einer a und einer b darzustellen, die dann auf dem stereoskopischen Ausgabegerät 108 dargestellt werden.

Nachfolgend werden weitere Ausführungsbeispiele erläutert. Es sei angenommen, dass als Objekt eine Person aufzunehmen ist, der sich innerhalb einer Szene befindet. Die Szene umfasst den Menschen, der in einem Raum steht und sich z.B. an seinem Platz leicht hin und her bewegt. Gemäß Ausführungsbeispielen ist vorgesehen, dass die Vorrichtung 202 (siehe Fig. 2) 30 Frames/Rahmen dieser Szene pro Sekunde aufnimmt, und für jeden Rahmen ein entsprechendes 3D-Modell der Szene erzeugt und durch die Scheitelpunkte und Farbwerte beschreibt. Die so erzeugten Daten für jeden Frame (jedes Einzelbild) umfassen, wie erwähnt, die Farbwerte und die Tiefeninformationen, beispielsweise RGB-Werte und X-Y- und Z-Werte, die jeweils einen Scheitelpunkt definieren, wobei die Mehrzahl der Scheitelpunkte eine Punktwolke bildet. Gemäß Ausführungsbeispielen kann erwünscht sein, den Hintergrund aus der Szene zu extrahieren, beispielsweise dann, wenn lediglich die Darstellung der Person an die Empfängerseite 204 (siehe Fig. 2) übertragen werden soll und dort beispielsweise mit einem anderen Hintergrund dargestellt werden soll, der entweder vom Sender zum Empfänger vorab oder parallel übertragen wird oder der am Empfänger vorgegeben ist. Zur Entfernung des Hintergrunds wird zunächst aus jeder einzelnen Punktwolke der Hintergrund extrahiert, d.h. aus der Vielzahl von Scheitelpunkten, die für ein Einzelbild existieren (= einzelne Punktwolke) werden diejenigen Scheitelpunkte gelöscht, die als dem Hintergrund zugehörig erkannt werden. Gemäß Ausführungsbeispielen wird der Z-Wert jedes einzelnen Scheitelpunkts mit einem Korridor-Abstand (Schwellwertabstand) des Standbereichs der darzustellenden Person verglichen, und Abstände, die anzeigen, dass ein Scheitelpunkt weiter entfernt oder näher als der Korridorabstand ist, wird als Hintergrundscheitelpunkt erkannt und weggelassen, d.h. es werden nur diejenigen Scheitelpunkte (Vertices) zugelassen, die innerhalb des Korridorabstands liegen, und die so gewonnenen Daten sind diejenigen, die die Person in einer Punktwolke abbilden. Mit anderen Worten wird die Anzahl von Scheitelpunkten (Vertices), welche die Punktwolke pro Einzelbild definieren, um diejenigen reduziert, die eindeutig dem Hintergrund zugeordnet werden.

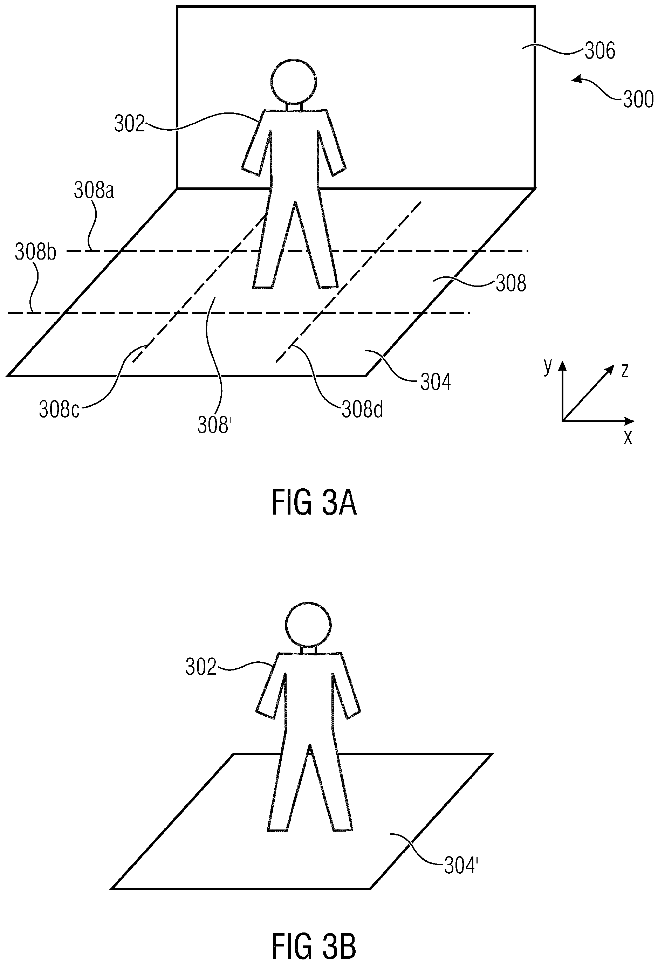

Fig. 3 zeigt schematisch diese Vorgehensweise, wobei Fig. 3(a) die anfänglich aufgenommene Szene 300 zeigt, in der eine Person 302 (Objekt) auf einem Boden 304 stehend dargestellt ist. Ferner ist eine Rückwand 306 dargestellt. Entlang der Z-Koordinate ist der Bereich 308 dargestellt, der durch die in X-Richtung verlaufenden gestrichelten Linien 308a, 308b begrenzt ist. Der Bereich 308 ist der oben erwähnte Schwellwertkorridor, und entsprechend Ausführungsbeispielen werden Scheitelwerte eines 3D-Modells, das aufgrund der 3D-Aufnahme der Szene 300 erzeugt wurde, gestrichen, sofern diese außerhalb des Schwellwertkorridors 308 liegen, so dass sich die in Fig. 3(b) gezeigte Darstellung ergibt, bei der lediglich die Person 302 sowie ein Teil des Bodens 304' verbleiben.

Bei weiteren Ausführungsbeispielen kann zusätzlich vorgesehen sein, den Schwellwertkorridor auch in X-Richtung zu beschränken, wie dies durch die gestrichelten Linien 308c und 308d in Fig. 3(a) dargestellt ist. Scheitelwerte, mit X-Werten außerhalb des Bereichs 308' werden aus den Daten, welche das 3D-Modell basierend auf der Szene 300 beschreiben gestrichen, so dass der verbleibende Bodenbereich 304' noch weiter reduziert werden kann.

Das durch die 3D-Engine erzeugte Datenmodell der Person 302 (siehe beispielsweise Fig. 3(b)) kann beispielsweise ein Gitter-Modell oder ein Dreiecks-Netz sein, abhängig von der verwendeten 3D-Engine. Am äußeren Rand des Dreiecks-Netzes, welches nach dem Abschneiden oder Extrahieren des Hintergrunds verbleibt, kann es aufgrund von Rauschen zu ungenauen Tiefenwerten kommen, die sich in fehlerhaften Abschnitten des 3D-Modells, beispielsweise in Dreiecken mit großer Tiefe, äußern. Gemäß Ausführungsbeispielen kann der Randbereich des 3D-Modells durch einen Glättungsalgorithmus geglättet werden, beispielsweise durch einen Glättungsalgorithmus, der große Tiefenwerte bzw. Tiefenabstände herausfiltert.

Wie oben erwähnt wurde, kann ein Objekt 100, 302 aus mehreren Perspektiven aufgenommen werden. Ein Grund für die mehreren Aufnahmen kann darin bestehen, dass das Objekt vollständig abzubilden ist, so dass ein vollständiges 3D-Modell vorliegt. In einem solchen Fall, aber auch in einem Fall, in dem nur ein Teil des Objekts, beispielsweise eine Vorderseite einer Person oder eines Objekts abgebildet werden, kann eine Situation auftreten, dass aufgrund der Ausgestaltung des Objekts, beispielsweise aufgrund einer Verdeckung eines Teils des Körpers einer Person durch eine Hand der Person oder durch einen vorspringenden Abschnitt eines Objekts dahinterliegende Abschnitte durch die eine 3D-Aufnahme nicht erfasst werden. Hierdurch entstehen bei der 3D-Aufnahme sogenannte Löcher, die als schwarze Stellen im 3D-Modell, beispielsweise im Dreiecks-Gitter, erkennbar sind. Bei der Verwendung einer 3D-Kamera entstehen diese Löcher dadurch, dass der Abstand des Infrarot-Sensors und der bildgebenden Kamera einige Zentimeter beträgt, so dass sich die Blickpyramiden beider Sensoren nicht vollständig überdecken. Durch perspektivische Verdeckungen, z.B. eine Hand einer Person vor ihrem Körper, entstehen somit Bereiche, die kein Dreiecks-Netz bzw. keinen Abschnitt des 3D-Modells als Grundlage haben, oder auch Bereiche, die keine Bildtextur besitzen.

Diese Problematik wird gemäß Ausführungsbeispielen dadurch gelöst, dass zumindest zwei 3D-Kameras verwendet werden, wobei gemäß anderen Ausführungsbeispielen auch mehr als zwei 3D-Kameras eingesetzt werden, die in einem Abstand zueinander angeordnet sind, so dass die hierdurch erzeugten 3D-Aufnahmen zumindest teilweise überlappend sind. Dies ermöglicht es, die Bereiche einer ersten 3D-Aufnahme, in denen sich eines der oben genannten Löcher befindet, durch die 3D-Aufnahme der weiteren Kamera(s) abzudecken. Beispielsweise wird aus den Scheitelpunktwerten jede 3D-Aufnahme, also aus den verschiedenen Punktwolken der verschiedenen 3D-Aufnahmen durch Triangulierung ein Dreiecks-Netz erstellt und die aufgenommenen Bilder werden auf dieses Dreiecks-Netz projiziert. Triangulierung kann beispielsweise unter Verwendung des Verfahrens gemäß Delauny oder unter Verwendung eines Höhenfeldes durchgeführt werden. Stellt man beide Dreiecksnetze übereinander sind keine schwarzen Bereiche ohne 3D-Informationen bzw. Farbinformationen mehr zu sehen.

Die auf die oben beschriebene Art und Weise erhaltenen texturierten 3D-Modelle bzw. Dreiecksnetze von verschiedenen, sich überlappenden Ansichten der Person werden nachfolgend, gemäß Ausführungsbeispielen, zu einer 360°-Rundumsicht der Person verbunden. Jeweils zwei sich überlappende Dreiecksnetze werden zur Überdeckung in Überlappungsbereichen gebracht und beginnend mit einer vorgegebenen Ebene, beispielsweise einer horizontalen Ebene (X-Z-Ebene) werden diejenigen Scheitelpunkte identifiziert, die einen vorbestimmten Abstand zueinander aufweisen. Abhängig von der Wahl des Abstands stellt sich die Datenmenge ein, und abhängig von den Gegebenheiten kann der Abstand variiert werden. Beispielsweise kann abhängig von der späteren Übertragung der Daten, bei Kenntnis des Übertragungsmediums, die Datenmenge an eine Bandbreite angepasst werden und entsprechend der Abstand bestimmt werden. Die identifizierten Punkte werden in einem neuen Dreiecksnetz zusammengefasst, und wenn eine Punktmenge, beispielsweise eine kreisförmige Punktmenge auf einer Ebene gefunden wurde, geht das Verfahren zur nächst höheren Ebene, was wiederholt wird, bis die relevante Punktewolke oder die relevanten Scheitelpunkte für die Außenhülle des Objekts gefunden sind. Beispielsweise können alle resultierenden Punkte von unten nach oben in einer verbundenen Spindel dargestellt werden. Als Ergebnis wird eine texturierte, verbundene Punktwolke der Außenhülle des Objekts als ein Frame erhalten, kurz gesagt, eine Vielzahl von X-, Y-, Z-Werten mit einer Reihenfolge.

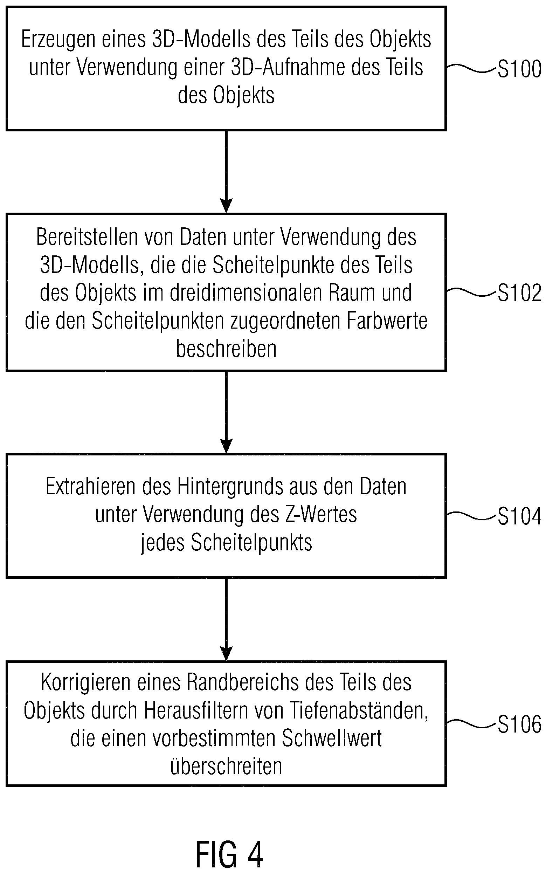

Fig. 4 zeigt ein Flussdiagramm eines Ausführungsbeispiels des Verfahrens zum Erzeugen von Daten für eine dreidimensionale Darstellung zumindest eines Teils eines Objekts, wie es oben erläutert wurde. In einem ersten Schritt S100 wird ein 3D-Modell des Teils des Objekts unter Verwendung einer 3D-Aufnahme des Teils des Objekts erzeugt. Im Schritt S102 werden Daten unter Verwendung des 3D-Modells bereitgestellt, die die Scheitelpunkte des Teils des Objekts im dreidimensionalen Raum und die den Scheitelpunkten zugeordneten Farbwerte beschreiben. Das Verfahren umfasst als optionalen Schritt das Extrahieren S104 des Hintergrunds aus den Daten unter Verwendung des Z-Werts jedes Scheitelpunkts, wie es oben erläutert wurde, und als weiteren optionalen Schritt das Korrigieren S106 eines Randbereichs des Objekts durch Herausfiltern von Tiefenabständen, die einen vorbestimmten Schwellenwert überschreiten, wie es oben erläutert wurde. Gemäß Ausführungsbeispielen kann die Korrektur des Randbereichs ein Antialiasing und die Vermeidung von Spikes, die große Tiefenwerte mit steilem Anstieg enthalten, umfassen Die Schritte S100 bis S106 werden gemäß Ausführungsbeispielen zur Erzeugung einer 3D-Livesequenz bzw. eines 3D-Films für jeden Frame der Sequenz/des Films wiederholt, wobei jeder Frame ein Einzelbild der Sequenz/des Films ist. Gemäß Ausführungsbeispielen beträgt die Wiederholungsrate 30 Frames pro Sekunde. Gemäß Ausführungsbeispielen können Texturinformationen zwischen den Scheitelpunktwerten (Vertizeswerten) interpoliert werden und benötigen somit wenig Datenbreite.

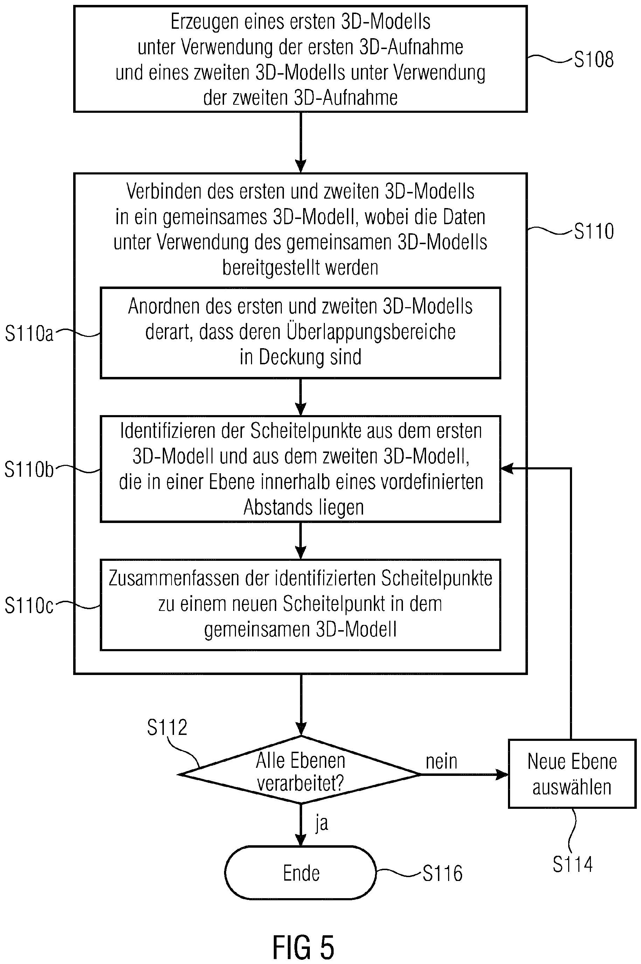

Fig. 5 zeigt ein Flussdiagramm mit weiteren Schritten gemäß Ausführungsbeispielen, bei denen das 3D-Modell unter Verwendung zumindest einer ersten 3D-Aufnahme und einer zweiten 3D-Aufnahme des Objekts aus jeweils unterschiedlichen, sich zumindest teilweise überlappenden Positionen erzeugt wird. Im Schritt S108 wird ein erstes 3D-Modell unter Verwendung der ersten 3D-Aufnahme und ein zweites 3D-Modell unter Verwendung der zweiten 3D-Aufnahme erzeugt. Im Schritt S110 werden das erste 3D-Modell und das zweite 3D-Modell verbunden, um ein gemeinsames 3D-Modell zu erzeugen, wobei die Daten, die im Schritt S102 (siehe Fig. 4) bereitgestellt werden, unter Verwendung des gemeinsamen 3D-Modells erzeugt und bereitgestellt werden. Das Verbinden der zwei 3D-Modelle umfasst gemäß dem dargestellten Ausführungsbeispiel den Schritt S110a, bei dem die zwei 3D-Modelle so angeordnet werden, dass deren Überlappungsbereiche in Deckung sind. Im Schritt S110b werden die Scheitelpunkte definiert, die innerhalb eines vordefinierten Abstands liegen, und die identifizierten Scheitelpunkte werden im Schritt S110c zusammengefasst. Die Schritte S110a bis S110c werden wiederholt, wenn im Schritt S112 festgestellt wird, dass noch nicht alle vorbestimmten Ebenen betreffend das 3D-Modell abgearbeitet wurden. In diesem Fall wird im Schritt S114 eine weitere Ebene ausgewählt, und das Verfahren kehrt zum Schritt S110b zurück. Anderenfalls, wenn im Schritt S112 festgestellt wird, dass alle Ebenen abgearbeitet wurden, endet das Verfahren im Schritt 116.

Die anhand der Fig. 4 und 5 beschriebenen Ausführungsbeispiele wurden im Zusammenhang mit der Erzeugung von 3D-Darstellungen für ein Objekt oder für eine Person erläutert, allerdings sind die beschriebenen Ausführungsbeispiele nicht hierauf beschränkt. Gemäß anderen Ausführungsbeispielen kann das Objekt auch der Hintergrund eines Raumes sein, der empfängerseitig derart angezeigt werden soll, dass ein Benutzer auf der Empfängerseite den Raum aus verschiedenen Perspektiven betrachten kann und sich innerhalb vorbestimmter Grenzen auch innerhalb des Raumes bewegen kann. In diesem Fall umfasst die 3D-Aufnahme eine 3D-Aufnahme des Hintergrunds eines Raumes, beispielsweise entsprechend den Schritten S100 bis S116, jedoch ohne den Schritt S104, da eine Entfernung des Hintergrunds an dieser Stelle natürlich nicht sinnvoll ist. Im Verfahren gemäß der Fig. 5 erfolgt durch die Schritte im Block S110 eine Verbindung der verschiedenen Aufnahmen des Innenraumes, um die Innenhülle des Raumes zu erzeugen. Gemäß Ausführungsbeispielen kann vorgesehen sein, bei einer Darstellung des so erzeugten dreidimensionalen Raumes auf der Empfängerseite einen Bereich, beispielsweise einen kreisförmigen Bereich, zu definieren, in dem sich ein Benutzer "frei bewegen" kann, um so die Illusion eines Live-3D-Films zu erhalten.

Nachfolgend wird ein weiteres Ausführungsbeispiel näher erläutert, bei dem eine Möglichkeit eröffnet wird, ein menschliches Gesicht zu verändern. Bei solchen Ansätzen geht es darum, eine Aufnahme einer Person, die einer anderen, beispielsweise bekannten Persönlichkeit, ähnlich sieht, beispielsweise im Bereich des Gesichts so weit zu modifizieren, dass die Ähnlichkeit noch größer wird. Bei diesem Ausführungsbeispiel wird eine Änderung des 3D-Modells bzw. des Dreiecksnetzes mit hoher Frequenz bewirkt, und die sich ergebende Animation besteht, wie bei einem Film aus einer Folge von komplett neuen Dreiecksnetzen, die hintereinander angezeigt werden, um dem menschlichen Betrachter den Anschein eines sich bewegenden Bilds zu vermitteln. Dies hat zur Folge, dass für das menschliche Auge eine kontinuierliche Bewegung in drei Dimensionen entsteht, da die Augen die diskreten Zustände nicht mehr unterscheiden können, da sie zu schnell aufeinanderfolgen. Stellt man diese Änderungen schnell genug auf einem autostereoskopischen Monitor dar, so entsteht für einen mit zwei Augen sehenden Menschen eine Hologramm-Illusion. Diese Hologramm-Illusion kann zur Laufzeit verändert werden.

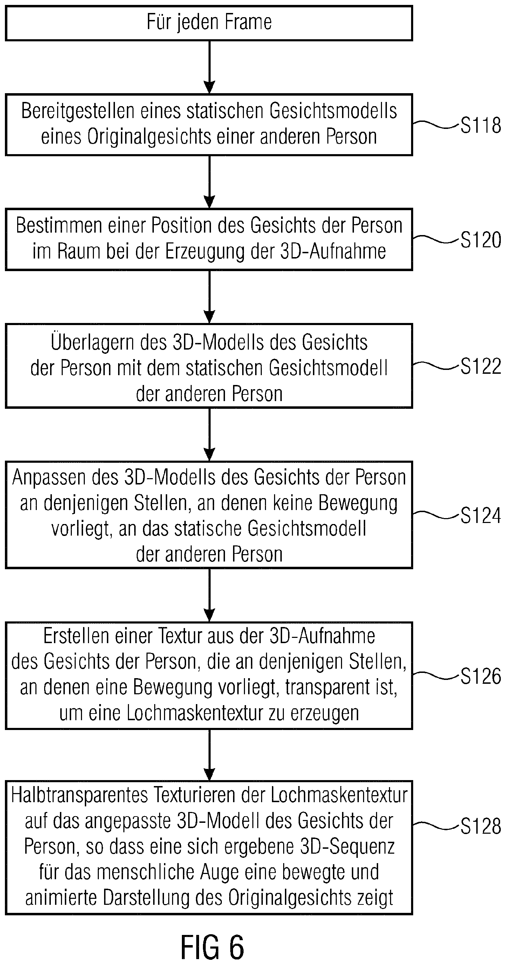

Die Fig. 6 zeigt ein Flussdiagramm, welches das Ausführungsbeispiel zur Veränderung eines menschlichen Gesichts verdeutlicht. Das Verfahren basiert auf einem Objekt, welches das Gesicht einer Person darstellt, und in einem Schritt S118 wird zunächst ein statisches Gesichtsmodell eines Originalgesichts einer anderen Person bereitgestellt. Die erste Position kann beispielsweise eine sogenannte Look-a-Like-Person sein, die der anderen Person, beispielsweise einer bekannten Person, ähnlich sieht. Das Gesichtsmodell des Originalgesichts der anderen Person ist ein statisches 3D-Modell mit Textur, das beispielsweise aus einer Photo- oder Filmaufnahme der anderen Person entstanden ist und somit einen entsprechend hohen Wiedererkennungseffekt haben kann.

Im Schritt S120 wird eine Position des Gesichts der Person im Raum bei der Erzeugung der 3D-Aufnahme bestimmt. Hierzu kann beispielsweise eine Positionsbestimmungsanlage, z.B. Nexonar, ein mit einem Sonarsensor bestücktes Gerät, das am Hinterkopf getragen wird, oder ein Raycasting verwendet werden. Nach Feststellung der Position des Gesichts wird im Schritt S122 das 3D-Modell des Gesichts der Person mit dem statischen Gesichtsmodell der anderen Person überlagert und im Schritt S124 erfolgt eine Anpassung des 3D-Modells des Gesichts der Person an denjenigen Stellen, an denen keine Bewegung vorliegt, an das statische Gesichtsmodell der anderen Person. Hierfür kann beispielsweise die Differenz aus den beiden 3D-Modellen oder Dreiecksgittern an denjenigen Stellen addiert werden, an denen sich keine Bewegung findet, z.B. im Bereich der Nase, der Wangen und Ähnlichem, so dass sich ein gemeinsames 3D-Modell oder 3D-Mesh ergibt, welches sich, aufgrund der Tatsache, dass die gerade beschriebenen Schritte für jeden Frame/jedes Einzelbild des 3D-Films durchgeführt werden, zur Laufzeit aktualisiert.

Im Schritt S126 wird eine Textur aus der 3D-Aufnahme des Gesichts der Person erstellt, und zwar an denjenigen Stellen, an denen eine Bewegung vorliegt, um eine Lochmaskentextur zu erzeugen, die im Schritt S128 halbtransparent auf das gemeinsame oder neue 3D-Modell texturiert wird, um so zur Laufzeit ein 3D-Modell zu erhalten, das für die menschlichen Augen als eine Sequenz einer bewegten und animierten Darstellung des Originalgesichts erkennbar ist.

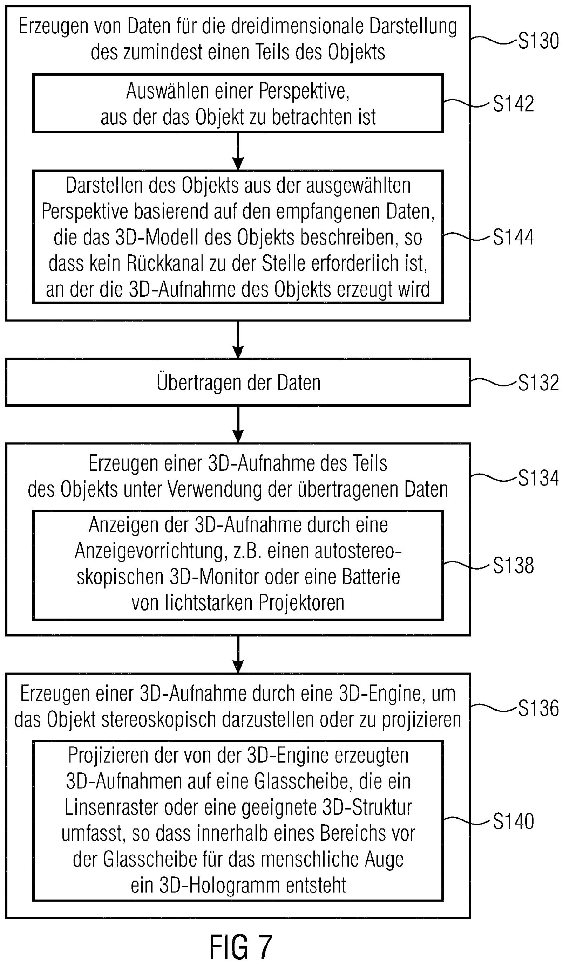

Anhand der Fig. 7 wird nachfolgend ein Ausführungsbeispiel zum Erzeugen einer dreidimensionalen Darstellung zumindest eines Teils eines Objekts näher erläutert, wie es beispielsweise durch das anhand der Fig. 2 beschriebene System durchgeführt wird. In einem ersten Schritt S130 werden Daten für die dreidimensionale Darstellung des zumindest einen Teils des Objekts erzeugt, und zwar entsprechend dem oben beschriebenen Verfahren, wie es beispielsweise anhand der Fig. 4, 5 und 6 erläutert wurde oder wie es anhand der Empfängerseite 202 in Fig. 2 erläutert wurde. Nachfolgend wird im Schritt S132 eine Übertragung der Daten über das Übertragungsmedium 106 von der Senderseite 202 zu der Empfängerseite 204 (siehe Fig. 2) durchgeführt, und im Schritt S134 werden die in Fig. 2 gezeigten 3D-Aufnahmen 100a und 100b, beispielsweise durch die 3D-Engine 210 auf Empfängerseite 204 erzeugt. Wie in Fig. 7 im Schritt S136 gezeigt ist, erfolgt die Erzeugung der 3D-Aufnahme durch eine 3D-Engine, um das Objekt stereoskopisch darzustellen oder zu projizieren. Gemäß einem Ausführungsbeispiel (siehe den Schritt S138) wird die 3D-Aufnahme durch eine Anzeigevorrichtung, z.B. einen autostereoskopischen 3D-Monitor 108 oder eine Batterie von lichtstarken Projektoren angezeigt.

Vor der Übertragung im Schritt S132 können die im Schritt S130 erzeugten Daten gemäß Ausführungsbeispiel nochmals durch eine Quantisierung geeignet reduziert werden, jedoch unter Inkaufnahme eines Datenverlusts. Ferner kann gemäß anderen Ausführungsbeispielen vorgesehen sein, auf die durch den Schritt S130 bereitgestellte Datenmenge bereits eine Region of Interest Encoding (Rol-Kodierung) anzuwenden, ebenso ist eine Differenz-Kodierung einzelner, aufeinanderfolgender Frames/Einzelbilder denkbar. Ferner kann die Datenmenge binär Kodiert werden und weiter reduziert werden, z.B. durch eine Lauflängenkodierung und ähnliche, im Stand der Technik bekannte Ansätze.

Die Übertragung im Schritt S132 kann über das Internet oder ein Intranet erfolgen, beispielsweise durch eine Client-Server-Beziehung unter Verwendung des TCP-IP-Protokolls, des UDP-Protokolls oder des Serverside-Protokolls. Alternativ oder zusätzlich kann die Übertragung S132 auch zu einer lokalen Abspeicherung der empfangenen Einzelbilder/Frames als lokale Datei führen.

Im Schritt S134 kann vor dem Bereitstellen der Daten an die 3D-Engine 210 ein Entpacken der Daten entsprechend der Kodierung derselben vor der Übertragung und ein Puffern derselben vorgesehen sein, wobei das Puffern vorgesehen ist, um sicherzustellen, dass nach Erreichen eines anfänglichen, erwünschten Füllzustands ein kontinuierliches Verarbeiten der Datenpakete möglich ist, auch bei unterschiedlichen oder variierenden Datenraten, mit denen die entsprechenden Datenpakete am Empfänger empfangen werden.

Gemäß einer Ausführungsform kann der Schritt S138 ein Anzeigen unter Verwendung des stereoskopischen 3D-Pepper's-Ghost-Verfahrens zur Erzeugung von Hologrammen umfassen, wie dies im Schritt S140 dargestellt ist, bei dem ein autostereoskopischer 3D-Monitor oder eine Batterie von lichtstarken Projektoren vorgesehen ist, um geeignete 3D-Bilder, beispielsweise die von der 3D-Engine 210 erzeugten Bilder 100a, 100b (siehe Fig. 2), auf eine Glasscheibe zu projizieren, die ein Linsenraster oder eine geeignete 3D-Struktur umfasst, so dass in einer vorbestimmten Blickrichtung vor der Glasscheibe für das menschliche Auge ein 3D-Hologramm entsteht.

Gemäß weiteren Ausführungsbeispielen kann vorgesehen sein, dass beispielsweise ein Benutzer empfängerseitig eine Perspektive auswählt, aus der das Objekt zu betrachten ist, wie dies im Schritt S142 angegeben ist, und entsprechend dem Schritt S144 wird das Objekt anschließend aus der gewählten Perspektive dargestellt, basierend auf den empfangenen Daten, die das 3D-Modell des Objekts beschreiben, ohne dass ein Rückkanal zu der Stelle erforderlich ist, an der die 3D-Aufnahme des Objekts erzeugt wird. Dies ist ein besonderes bevorzugtes Ausführungsbeispiel, da an der Empfängerseite ein 3D-Modell des Objekts oder eines Teils des Objekts erzeugt wird, welches auf die oben beschriebene Art und Weise an die Empfängerseite übertragen wird, mit einer reduzierten Datenmenge, und an der Empfängerseite unter Zugrundelegung einer entsprechenden 3D-Engine die Rückgewinnung des ursprünglichen 3D-Modells ermöglicht, so dass die gesamte 3D-Darstellung des Objekts an der Empfängerseite vorliegt. Wurde z.B. das gesamte Objekt als 3D-Modell erfasst und verarbeitet, so wird an der Empfängerseite die Möglichkeit geschaffen, dass ein Benutzer eine Perspektive frei auswählt, mit der er auf das entsprechende Objekt blicken möchte, und entsprechend der ausgewählten Perspektive werden die für die entsprechende Darstellung erforderlichen 3D-Aufnahmen aus dem 3D-Modell an der Empfängerseite erzeugt, Somit kann empfängerseitig frei bestimmt werden, aus welcher Perspektive bzw. welchen Blickwinkeln ein 3D-Modell zu betrachten ist, so dass dann die entsprechenden 3D-Aufnahmen für die Darstellung auf dem empfängerseitigen Monitor generiert werden können, ohne dass es einer Neuaufnahme und damit einer Neuübertragung der Daten oder eines Rückkanals an den Sender bedarf. Diese Ausgestaltung wird vorzugsweise bei folgenden Anwendungen verwendet:
- Präsentationen auf Messen oder Shows mit Glasscheibe in Menschengröße oder größer;
- Kommunikationsanwendung im Schreibtisch, z.B. in Form einer Glasscheibe in Monitorgröße, die aus dem Schreibtisch herausfahrbar ist, auf der ein Hologramm des Gesichts eines Gesprächspartners erscheint;
- im Wohnbereich, in dem eine Glasscheibe mit Projektionshardware in beliebiger Größe aufgestellt ist, oder Außenfensterscheiben, so dass ein oder mehrere Gesprächspartner im Wohnbereich stehend als Hologramm darstellbar sind.

Die Vorgehensweise, wie sie oben anhand der verschiedenen Ausführungsbeispiele im Detail beschrieben wurde, wird gemäß Ausführungsbeispielen vorzugsweise bei folgenden Anwendungen eingesetzt:
- interaktiver und immersiver 3D Film für Filminhalte jeglicher Art;
- Kommunikation in Multi-User 3D Welten, z.B. für E-Learning, Edutainment, Vertrieb, Politik, Unterhaltung, Shows;
- realistischere Avatare für Spiele und Unterhaltung;
- virtuelle Greeter als Menschendarstellungen zur lokalen Kommunikation mit Menschen;
- virtuelle Spiegel, die verschiedene Kleider am Menschen anzeigen;
- Überwachung von Maschinen in Produktionsanlagen im Rahmen von Industrie 4.0 und Internet der Dinge und Logistik, Betrieb und Beschaffung von Verschleißteilen;
- Überwachung von Menschen in kritischen Infrastrukturen, z.B. Grenzüberwachung;
- Training und Simulation von gefährlichen oder nicht existierenden Umgebungen mit menschlichen Interaktionen.

Ferner findet die vorliegenden Ausführungsbeispiele Anwendung bei der Überwachung als Darstellung und Übertragung von sich ändernden Inhalten. Für einige Anwendungen ist die Überwachung, Erkennung und Übertragung von sich ändernden Inhalten besonders wichtig. Hierbei werden Differenzen eines statischen 3D-Modells in bestimmten Grenzen (Schwellenwerte) zu einem aufgenommenen Livebild erzeugt, um Änderungen schneller und genauer als in einem 2D-Videobild zu erkennen. Beispielsweise sei die Überwachung einer Bohranlage betrachtet. Ein statisches 3D-Modell der Bohranlage wird mehrfach pro Sekunde mit einer 3D-Aufnahme aus einem Blickwinkel auf die Bohranlage verglichen, wobei beispielsweise die Bohranlage während der Laufzeit über die 3D-Engine animiert werden kann. Änderungen im Live-3D-Modell, wie beispielsweise das Eintreten eines Menschen in einen Aufnahmebereich, werden mit dem statischen 3D-Modell verglichen und können Alarme auslösen. Für eine 3D-Sicht der Situation und der Lage der Anlage mit dem Menschen ist nur die Übertragung der Unterschiede nötig, da die statische Anlage bereits als 3D-Modell vorliegt, was gegenüber der vollständigen Videoübertragung in Bezug auf Datenmenge, Geschwindigkeit, 3D-Raumansicht mit interaktiven Blickpunkt und Darstellungsqualität sowie Güte der Visualisierung vorteilhaft ist.

Nachfolgend werden weitere Ausführungsbeispiele beschrieben bzw. bereits beschriebene Ausführungsbeispiele konkretisiert. So schaffen Ausführungsbeispiele ein Verfahren zum Erzeugen von Daten für eine zwei- oder dreidimensionale Darstellung zumindest eines Teils eines Objekts, mit:
Erzeugen eines 3D-Modells des Teils des Objekts unter Verwendung einer 3D-Aufnahme des Teils des Objekts; und
Bereitstellen von Daten unter Verwendung des 3D-Modells, die die Scheitelpunkte des Teils des Objekts im dreidimensionalen Raum und die den Scheitelpunkten zugeordneten Farbwerte beschreiben.

Der Ansatz zum Erzeugen von Daten für eine zwei- oder dreidimensionale Darstellung ist vorteilhaft, da, anders als in herkömmlichen Ansätzen, auf die aufwendige Übertragung von zweidimensionalen Bilddaten verzichtet wird. Vielmehr wird ausgehend von den dreidimensionalen Bilddaten, welche eine 3D-Aufnahme des Teils des Objekts darstellen, ein 3D-Modell erstellt, welches zumindest den Teil des Objekts darstellt, von dem die 3D-Aufnahme erhalten wurde. Dieses 3D-Modell kann beispielsweise ein Gittermodell oder ein Dreiecksnetz sein, wie es beispielsweise aus dem Bereich der CAD-Technik bekannt ist. Das so erhaltene Modell lässt sich durch die Position der Scheitelwerte im dreidimensionalen Raum beschreiben, beispielsweise im kartesischen Koordinatensystem durch die X-, Y- und Z-Werte der Scheitelpunkte. Ferner lassen sich die Farbwerte den entsprechenden Scheitelpunkten zuordnen, ggf. werden auch noch Texturinformationen übertragen. Die hierdurch erzeugte Datenmenge ist um ein Vielfaches geringer als die Datenmenge, die bei der Übertragung eines 2D-Bilds mit einer Größe von 1024 x 768 Pixel anfällt, so dass hierdurch eine aufgrund der geringen Datenmenge zur Darstellung des Objekts in dreidimensionaler Form eine schnelle und verzögerungsfreie Übertragung der Daten über ein Übertragungsmedium ermöglicht wird, insbesondere werden die Probleme im Zusammenhang mit den im Stand der Technik herkömmlicherweise anfallenden großen Datenmengen verhindert. Die so erzeugten Daten können entweder zur Erzeugung einer dreidimensionalen Darstellung (z.B. eine 3D-Livesequenz oder ein 3D-Film) oder zur Erzeugung einer zweidimensionalen Darstellung (z.B. eine 2D-Livesequenz oder ein 2D-Film) auf einer geeigneten Anzeigevorrichtung zur Darstellung des Objekts oder des Teils des Objekts verwendet werden.

Gemäß Ausführungsbeispielen umfasst die 3D-Aufnahme den Teils des Objekts und einen Hintergrund, wobei das Verfahren ferner das Extrahieren des Hintergrunds aus den Daten unter Verwendung des Z-Werts jedes Scheitelpunkts umfasst, beispielsweise durch Entfernen eines Scheitelpunkts aus den Daten, wenn der Z-Wert des Scheitelwerts außerhalb eines vordefinierten Bereichs ist. Gemäß Ausführungsbeispielen kann zusätzlich vorgesehen sein, den Randbereichs des Objekts zu korrigieren, indem Tiefenabstände, die einen vorbestimmten Schwellwert überschreiten, herausgefiltert werden.

Diese Vorgehensweise ist vorteilhaft, da hierdurch das aufgenommene Objekt auf einfache Art und Weise ohne den ebenfalls aufgenommenen Hintergrund dargestellt werden kann, und so nur die Daten für das eigentliche Objekt erzeugt werden, nicht jedoch die ggf. gar nicht erforderlichen Hintergrunddaten, so dass hierdurch eine weitere Reduzierung der Datenmenge erreicht wird. Ferner ermöglicht diese Vorgehensweise, das durch die erzeugten Daten dreidimensional darzustellende Objekt an der Empfangsseite in einem anderen Kontext darzustellen, beispielsweise vor einem anderen Hintergrund.

Gemäß Ausführungsbeispielen wird das 3D-Modell unter Verwendung zumindest einer ersten 3D-Aufnahme und einer zweiten 3D-Aufnahme des Objekts aus jeweils unterschiedlichen Positionen erzeugt, wobei die erste und zweite 3D-Aufnahme zumindest teilweise überlappen. Die unterschiedlichen Positionen können derart gewählt sein, dass ein Bereich des Objekts, der in der ersten 3D-Aufnahme des Objekts nicht sichtbar ist, in der zweiten 3D-Aufnahme des Objekts sichtbar ist. Gemäß Ausführungsbeispielen kann vorgesehen sein, ein erstes 3D-Modell unter Verwendung der ersten 3D-Aufnahme und ein zweites 3D-Modell unter Verwendung der zweiten 3D-Aufnahme zu erzeugen, und das erste und zweite 3D-Modell in ein gemeinsames 3D-Modell zu verbinden, wobei die Daten unter Verwendung des gemeinsamen 3D-Modells bereitgestellt werden. Gemäß Ausführungsbeispielen kann das Verbinden des ersten und zweiten 3D-Modells in ein gemeinsames 3D-Modell Folgendes umfassen: Anordnen des ersten und zweiten 3D-Modells derart, dass deren Überlappungsbereiche in Deckung sind, Identifizieren der Scheitelpunkte aus dem ersten 3D-Modell und aus dem zweiten 3D-Modell, die in einer Ebene innerhalb eines vordefinierten Abstands liegen, und Zusammenfassen der identifizierten Scheitelpunkte zu einem neuen Scheitelpunkt in dem gemeinsamen 3D-Modell. Vorzugsweise wird das Identifizieren und Zusammenfassen für eine Mehrzahl von Ebenen wiederholt, wobei die Anzahl und der Abstand der Mehrzahl von Ebenen so gewählt ist, dass der Teil des Objekts durch das gemeinsame 3D-Modell dargestellt ist.

Gemäß Ausführungsbeispielen kann vorgesehen sein, dass eine Mehrzahl von 3D-Aufnahmen des Objekts aus unterschiedlichen, zumindest teilweise überlappenden Positionen verwendet wird, um das 3D-Modell zu erzeugen, so dass das 3D-Modell mehrere Abschnitte des Objekts oder sogar das vollständige Objekt umfasst.

Diese Ausgestaltung ist vorteilhaft, da hierdurch sichergestellt wird, dass alle Bereiche des Teils des Objekts, welches dreidimensional darzustellen ist, durch entsprechende Daten des 3D-Modells beschrieben werden, so dass insbesondere in einer Darstellung nicht gezeigte Abschnitte des Objekts aufgrund der zweiten Darstellung aus einer anderen Perspektive bzw. aus einem anderen Blickwinkel erkannt werden und zusammengeführt werden. Dies ermöglicht insbesondere für den Fall einer Mehrzahl von Aufnahmen aus einer Mehrzahl von Blickrichtungen die Erzeugung eines 3D-Modells des gesamten Objekts, welches dann entsprechend der Scheitelpunkte und der Farbwerte des 3D-Modells beschrieben werden, so dass bei einer Wiedergewinnung der Aufnahmen auf einfache Art und Weise an der Empfangsstelle eine Betrachtung des Objekts aus einer beliebig festlegbaren Perspektive möglich ist, insbesondere eine Betrachtung ohne fehlerhafte oder fehlende Stellen.

Gemäß Ausführungsbeispielen umfasst das Bereitstellen der Daten ein Reduzieren der Datenmenge ohne Datenverlust, durch Bestimmen der räumlichen Abstände der Scheitelwerte, und Korrigieren der räumlichen Abstände als Folgedifferenzen ausgehend von einem vorgegebenen Startpunkt. Gemäß Ausführungsbeispielen kann vorgesehen sein, mit dem Kodieren an einem unteren Punkt des Objekts zu beginnen, und spiralförmig bis zu einem oberen Punkt des Objekts fortzuführen.

Diese Vorgehensweise ist vorteilhaft, da hierdurch eine nochmalige Reduzierung der Datenmenge ermöglicht wird, ohne dass ein Datenverlust eintritt, da ausgehend vom Anfangspunkt, der vollständig Kodiert ist, lediglich die Differenzwerte zu den Positionen der benachbarten Scheitelpunkte zu definieren sind, wodurch sich die angesprochene weitere Reduzierung der Datenmenge ergibt.

Gemäß Ausführungsbeispielen umfasst das Erzeugen des 3D-Modells das Bereitstellen der 3D-Aufnahme des Objekts bzw. des Teils des Objekts durch eine 3D-Kamera oder das Bereitstellen einer stereoskopischen Aufnahme des Objekts bzw. des Teils des Objekts.

Diese Ausgestaltung ist vorteilhaft, da auf bekannte Ansätze zur Erzeugung von 3D-Aufnahmen bzw. stereoskopischen Aufnahmen zurückgegriffen werden kann, die dann als Eingabe für den Prozess, der beispielsweise durch eine 3D-Engine durchgeführt wird, dienen, um das 3D-Modell zu erfassen und entsprechend zu Kodieren.

Gemäß Ausführungsbeispielen handelt es sich bei dem Objekt um eine Person, ein Tier, einen Gegenstand oder einen Hintergrund.

Diese Vorgehensweise ist vorteilhaft, da der Ansatz im Hinblick auf das darzustellende Objekt keinerlei Beschränkungen unterworden ist, da aus den 3D-Aufnahmen des Objekts auf die beschriebene Art und Weise ein deutlich reduzierter Datensatz zur Beschreibung desselben in dreidimensionaler Form gewonnen werden kann. Handelte es sich bei dem Objekt um einen Hintergrund, so ist dies vorteilhaft, da hierdurch die Möglichkeit besteht, einen erwünschten Hintergrund bereitzustellen, und an eine entfernte Position zur Darstellung in dreidimensionaler Ausgestaltung bereitzustellen, insbesondere ermöglicht die Darstellung des gesamten Hintergrunds, beispielsweise eines Raums, der durch mehrere Kameras in dreidimensionaler Art aufgenommen wird, die Erstellung von Daten zur Darstellung des Hintergrunds auf Grundlage des 3D-Modells, die mit einer reduzierten Datenmenge übertragen werden und die es an der Empfangsstelle ermöglichen, den Hintergrund, beispielsweise den Raum, so zu generieren, dass ein Betrachter am Empfangsort in der Lage ist, aus einer beliebigen Position/Perspektive den Hintergrund wahrzunehmen.

Gemäß Ausführungsbeispielen werden das Erzeugen des 3D-Modells und das Bereitstellen der Daten mit einer vorbestimmten Wiederholungsrate wiederholt, um eine Vielzahl von zeitlich aufeinanderfolgenden Frames zu erzeugen, die jeweils die bereitgestellten Daten enthalten und als 3D-Sequenz anzeigbar sind. Vorzugsweise ist die Wiederholungsrate derart gewählt, dass in einer Sekunde bis zu 30 Frames erzeugt werden.

Diese Vorgehensweise ist vorteilhaft, da hierdurch die Möglichkeit eröffnet wird, 3D-Sequenzen oder 3D-Filme zu erzeugen, die aufgrund der geringen Datenmenge jedes Einzelframes ohne Probleme im Hinblick auf die Übertragungsdauer, Übertragungsbandbreite und Datenmenge von der Stelle, an der die Daten erzeugt werden, an eine Empfangsstelle, an der die Daten anzuzeigen sind, übertragen werden können. Diese Vorgehensweise ermöglicht erstmals, anders als im Stand der Technik, die zuverlässige und schnelle Erzeugung von Daten zur Darstellung eines 3D-Films bzw. einer 3D-Sequenz, die für eine Übertragung über ein Übertragungsmedium mit beschränkter Bandbreite, beispielsweise das Internet, geeignet sind.

Gemäß Ausführungsbeispielen ist das Objekt zumindest das Gesicht einer Person, und das vorliegende Verfahren umfasst für jeden Frame Folgendes: Bereitstellen eines statischen Gesichtsmodells eines Originalgesichts einer anderen Person, Bestimmen einer Position des Gesichts der Person im Raum bei der Erzeugung der 3D-Aufnahme, Überlagern des 3D-Modells des Gesichts der Person mit dem statischen Gesichtsmodell der anderen Person, Anpassen des 3D-Modells des Gesichts der Person an denjenigen Stellen, an denen keine Bewegung vorliegt, an das statische Gesichtsmodell der anderen Person, Erstellen einer Textur aus der 3D-Aufnahme des Gesichts der Person, die an den jeweiligen Stellen, an denen eine Bewegung vorliegt, transparent ist, um eine Lochmaskentextur zu erzeugen, und halbtransparentes Texturieren der Lochmaskentextur auf das angepasste 3D-Modell des Gesichts der Person, so dass eine sich ergebende 3D-Sequenz für das menschliche Auge eine bewegte und animierte Darstellung des Originalgesichts zeigt.

Diese Vorgehensweise ist vorteilhaft, da hierdurch auf einfache Art und Weise ermöglicht wird, einer Person, die im Hinblick auf Körperbau und Statur einer bekannten Person ähnlich ist, die Gesichtskonturen der anderen Person zuzuordnen, so dass die bereitgestellten Daten, die aufgrund der beschriebenen Vorgehensweise eine geringe Datenmenge aufweisen, an der Empfangsstelle so aufbereitet werden können, dass der dortige Betrachter den Eindruck gewinnt, dass die andere Person dargestellt ist, was insbesondere im Bereich der Unterhaltungsindustrie und ähnlichen Bereichen vorteilhaft ist.

Ausführungsbeispiele schaffen ferner ein Verfahren zum Erzeugen einer zwei- oder dreidimensionalen Darstellung zumindest eines Teils eines Objekts, mit:
Erzeugen von Daten für die zwei- oder dreidimensionale Darstellung des zumindest einen Teils des Objekts gemäß dem beschriebenen Verfahren;
Übertragen der Daten; und
Erzeugen einer 2D- oder 3D-Aufnahme des Teils des Objekts unter Verwendung der übertragenen Daten.

Diese Vorgehensweise ist vorteilhaft, da aufgrund des beschriebenen Ansatzes, die für die dreidimensionale Darstellung erzeugten Daten nur eine geringe Datenmenge aufweisen und somit auf einfache Art und Weise übertragen werden. Die so empfangenen Daten, welche das 3D-Modell anzeigen, ermöglichen durch Anwenden einer 3D-Engine das Erzeugen einer entsprechenden 3D-Aufnahme des Teils des Objekts, welche dann auf herkömmliche Art und Weise zur dreidimensionalen Darstellung auf einer Anzeigevorrichtung, beispielsweise einem stereoskopischen Monitor, verwendet werden kann. Dies kann beispielsweise durch Erzeugen einer 3D-Aufnahme durch die 3D-Engine erfolgen, um das Objekt stereoskopisch darzustellen oder zu projizieren. Vorzugsweise erzeugt die 3D-Engine bis zu 30 3D-Aufnahmen pro Sekunde, was vorteilhaft ist, da hierdurch Bewegtbilder, also 3D-Filme oder 3D-Sequenzen, aus den empfangenen Daten erzeugt werden können.

Gemäß Ausführungsbeispielen umfasst das Verfahren einen Anzeigen der 3D-Aufnahme durch eine Anzeigevorrichtung, z.B. einen autostereoskopischen 3D-Monitor oder durch eine Batterie von lichtstarken Projektoren, wobei vorgesehen sein kann, dass die Anzeigevorrichtung unter Verwendung des stereoskopischen 3D-Pepper's-Ghost-Verfahrens zur Erzeugung von Hologrammen arbeitet. Bei dieser Ausgestaltung kann das Verfahren ein Projizieren der von der 3D-Engine erzeugten 3D-Aufnahmen auf eine Glasscheibe umfassen, die ein Linsenraster oder eine geeignete 3D-Struktur umfasst, so dass innerhalb eines Bereichs vor der Glasscheibe für das menschliche Auge ein 3D-Hologramm entsteht.

Diese Vorgehensweise ist vorteilhaft, da hierdurch die Möglichkeit geschaffen wird, herkömmliche Anzeigevorrichtungen zur Erzeugung von 3D-Darstellungen von Objekten zu verwenden, die auf Grundlage von Eingangsdaten arbeiten, wie sie auch im Stand der Technik verwendet werden, die jedoch unter Zugrundelegung der erzeugten Daten aus dem 3D-Modell generiert werden.

Gemäß Ausführungsbeispielen kann das Übertragen der Daten eine Übertragung über das Internet oder ein Intranet umfassen, z.B. durch eine Client-Server-Beziehung, beispielsweise unter Verwendung des TCP-IP-, des UDP- oder des Serverside-Protokolls. Alternativ oder zusätzlich kann auch ein lokales Abspeichern der Daten als Datei vorgesehen sein.

Diese Vorgehensweise ist vorteilhaft, da herkömmliche Übertragungsmedien zum Einsatz gelangen, da aufgrund der beschriebenen Vorgehensweise keine besonderen Anfordernisse an die bereitgestellte Bandbreite und Übertragungskapazität vorliegen.

Gemäß Ausführungsbeispielen kann an der Empfängerseite vorgesehen sein, eine Perspektive auszuwählen, aus der das Objekt zu betrachten ist, und das Objekt aus dargestellten Perspektive basierend auf den empfangenen Daten darzustellen, wobei die Daten das 3D-Modell des Objekts beschreiben, so dass kein Rückkanal zu der Stelle erforderlich ist, an der die 3D-Aufnahme des Objekts erzeugt wird.

Diese Vorgehensweise stellt einen besonderen Vorteil des beschriebenen Ansatzes dar, da an der Empfängerseite ein 3D-Modell des Objekts oder eines Teils des Objekts erzeugt wird, welches auf die oben beschriebene Art und Weise an die Empfängerseite übertragen wird, mit einer reduzierten Datenmenge. Dies ermöglicht an der Empfängerseite unter Zugrundelegung einer entsprechenden 3D-Engine, die Rückgewinnung des ursprünglichen 3D-Modells, so dass die gesamte 3D-Darstellung des Objekts an der Empfängerseite vorliegt. Wurde nun das gesamte Objekt als 3D-Modell erfasst und verarbeitet, so wird an der Empfängerseite die Möglichkeit geschaffen, dass beispielsweise ein Benutzer eine Perspektive auswählt, mit der er auf das entsprechende Objekt blicken möchte, und entsprechend der ausgewählten Perspektive werden die für die entsprechende Darstellung erforderlichen 3D-Aufnahmen aus dem 3D-Modell an der Empfängerseite erzeugt. Eine solche Vorgehensweise ist im Stand der Technik nicht ohne weiteres möglich, da hier empfängerseitig nur die senderseitig erzeugten Bilder vorliegen, die zur dreidimensionalen Darstellung auf der Anzeige zu kombinieren sind. Um eine andere Perspektive zu erhalten, ist es erforderlich, senderseitig eine entsprechende andere Aufnahme aus einer anderen Perspektive zu erzeugen, diese zu übertragen, um dann entsprechend eine Darstellung zu ermöglichen. Dies erfordert zum einen eine nochmalige Übertragung der Daten mit den oben bereits beschriebenen Problemen aufgrund der hohen Datenmenge, und zum anderen wäre ein Rückkanal vom Empfänger an die Senderseite nötig, um die geänderte Perspektive an den Sender zu übermitteln, um die erwünschte Neuaufnahme zu ermöglichen. Diese Problematik wird vermieden, da empfängerseitig bereits das 3D-Modell des Objekts bzw. des Teils des Objekts vorliegt, so dass empfängerseitig bestimmt werden kann, aus welcher Perspektive dieses 3D-Modell zu betrachten ist, so dass dann die entsprechenden 3D-Aufnahmen für die Darstellung auf dem empfängerseitigen Monitor generiert werden können, ohne dass es einer Neuaufnahme und damit einer Neuübertragung der Daten oder eines Rückkanals an den Sender bedarf.

Ausführungsbeispiele schaffen ferner ein Computerprogramm mit Anweisungen zum Ausführen des Verfahrens, wenn die Anweisungen durch einen Computer ausgeführt werden, wodurch bei einer Computerimplementierung des beschriebenen Ansatzes ebenfalls die oben erwähnten Vorteile erreicht werden.

Ausführungsbeispiele schaffen ferner eine Vorrichtung zum Erzeugen von Daten für eine zwei- oder dreidimensionale Darstellung zumindest eines Teils eines Objekts, mit:
einem Eingang, der konfiguriert ist, um eine 3D-Aufnahme des Teils des Objekts zu empfangen;
einer 3D-Engine, die mit dem Eingang verbunden ist und konfiguriert ist, um unter Verwendung der empfangenen 3D-Aufnahme ein 3D-Modell des Teils des Objekts zu erzeugen, und um unter Verwendung des 3D-Modells, Daten zu erzeugen, die die Scheitelpunkte des Teils des Objekts im dreidimensionalen Raum und die den Scheitelpunkten zugeordneten Farbwerte beschreiben; und
einem Ausgang, der mit der 3D-Engine verbunden ist und konfiguriert ist, um die erzeugten Daten bereitzustellen.

Gemäß Ausführungsbeispielen ist die 3D-Engine konfiguriert, um einen Hintergrund in der 3D-Aufnahme aus den Daten unter Verwendung des Z-Wertes jedes Scheitelpunkts zu extrahieren, wobei vorzugsweise ein Randbereich des Teils des Objekts durch Herausfiltern von Tiefenabständen, die einen vorbestimmten Schwellenwert überschreiten, korrigiert werden.

Gemäß Ausführungsbeispielen ist der Eingang konfiguriert, um zumindest eine erste 3D-Aufnahme und eine zweite 3D-Aufnahme des Objekts aus jeweils unterschiedlichen Positionen zu empfangen, wobei die erste und zweite 3D-Aufnahme zumindest teilweise überlappen. Die 3D-Engine ist konfiguriert, um das 3D-Modell unter Verwendung der ersten 3D-Aufnahme und der zweiten 3D-Aufnahme des Objekts zu erzeugen. Vorzugsweise erzeugt die 3D-Engine ein erstes 3D-Modell unter Verwendung der ersten 3D-Aufnahme und ein zweites 3D-Modell unter Verwendung der zweiten 3D-Aufnahme und ein gemeinsames 3D-Modell unter Verwendung des ersten und zweiten 3D-Modells, wobei die Daten unter Verwendung des gemeinsamen 3D-Modells erzeugt werden.

Gemäß Ausführungsbeispielen bewirkt die 3D-Engine eine Reduzierung der Datenmenge ohne Datenverlust, indem die räumlichen Abstände der Scheitelwerte bestimmt werden, und die räumlichen Abstände als Folgedifferenzen ausgehend von einem vorgegebenen Startpunkt bis zu einem Endpunkt spindelartig Kodiert werden.

Gemäß Ausführungsbeispielen umfasst die Vorrichtung eine 3D-Kamera oder eine stereoskopische Aufnahmevorrichtung zum Erzeugen der 3D-Aufnahme des Objekts, wobei die 3D-Kamera bzw. die stereoskopische Aufnahmevorrichtung mit dem Eingang verbunden ist.

Gemäß Ausführungsbeispielen ist die 3D-Engine konfiguriert, um das 3D-Modell und die Daten mit einer bestimmten Wiederholungsrate zu erzeugen, um eine Vielzahl von zeitlich aufeinanderfolgenden Frames zu erzeugen, die jeweils die bereitgestellten Daten enthalten und als 3D-Sequenz anzeigbar sind.

Gemäß Ausführungsbeispielen ist das Objekt zumindest das Gesicht einer Person, und die 3D-Engine ist konfiguriert, um für jeden Frame eine Position des Gesichts der Person im Raum bei der Erzeugung der 3D-Aufnahme zu bestimmen, um das 3D-Modell des Gesichts der Person mit einem statischen Gesichtsmodell eines Originalgesichts einer anderen Person zu überlagern, um das 3D-Modell des Gesichts der Person an denjenigen Stellen, an denen keine Bewegung vorliegt, an das statische Gesichtsmodell der anderen Person anzupassen, um eine Textur aus der 3D-Aufnahme des Gesichts der Person, die an denjenigen Stellen, an denen eine Bewegung vorliegt, transparent ist, zu erstellen, um eine Lochmaskentextur zu erzeugen, und um die Lochmaskentextur auf das angepasste 3D-Modell des Gesichts der Person halbtransparent zu texturieren, so dass eine sich ergebende 3D-Sequenz für das menschliche Auge eine bewegte und animierte Darstellung des Originalgesichts zeigt.

Die gerade genannten Ausführungsbeispiele bieten die Vorteile, die oben im Zusammenhang mit dem beschriebenen Verfahren erläutert wurden.

Ausführungsbeispiele schaffen ein System zum Erzeugen einer zwei- oder dreidimensionalen Darstellung zumindest eines Teils eines Objekts, mit:
einer Vorrichtung zum Erzeugen von Daten für die zwei- oder dreidimensionale Darstellung des zumindest einen Teils des Objekts gemäß Ausführungsbeispielen, einem Übertragungsmedium zum Übertragen der Daten, das mit der Vorrichtung zum Erzeugen der Daten verbunden ist, und
einer 3D-Engine, die mit dem Übertragungsmedium verbunden ist, und konfiguriert ist, um eine 2D- oder 3D-Aufnahme des Teils des Objekts unter Verwendung der übertragenen Daten zu erzeugen.

Gemäß Ausführungsbeispielen umfasst das System eine Anzeigevorrichtung, z.B. in Form eines autostereoskopischen 3D-Monitos oder in Form einer Batterie von lichtstarken Projektoren, die mit der 3D-Engine verbunden ist. Vorzugsweise arbeitet die Anzeigevorrichtung unter Verwendung des stereoskopischen 3D Pepper's-Ghost Verfahrens zur Erzeugung von Hologrammen, und ist konfiguriert, um die von der 3D-Engine erzeugten 3D-Aufnahmen auf eine Glasscheibe zu projizieren, die ein Linsenraster oder eine geeignete 3D-Struktur umfasst, so dass innerhalb eines Bereichs vor der Glasscheibe für das menschliche Auge ein 3D-Hologramm entsteht.

Gemäß Ausführungsbeispielen ist die 3D-Engine des Systems konfiguriert, um eine Auswahl einer Perspektive zu empfangen, aus der das Objekt zu betrachten ist, und um das Objekt aus der ausgewählten Perspektive basierend auf den empfangenen Daten, die das 3D-Modell des Objekts beschreiben, darzustellen, so dass kein Rückkanal zu der Stelle erforderlich ist, an der die 3D-Aufnahme des Objekts erzeugt wird.

Das beschriebene System hat die oben, im Zusammenhang mit dem Verfahren näher beschriebenen Vorteile.

Ausführungsbeispiele schaffen somit die Möglichkeit für eine interaktive Echtzeit-3D-Graphik. Das im Stand der Technik bestehende Problem im Hinblick auf die ungeheure Datenmenge betreffend die Darstellung von 3D-Objekten wird gemäß Ausführungsbeispielen mit Hilfe einer 3D-Engine angegangen, auf der beispielsweise eine sogenannte Echtzeitsoftware für die Darstellung einer Computergraphik läuft. Bei der Kodierung der 3D-Bilddaten wird die räumliche Komponente des 3D-Modells als eine deterministische Folge von räumlichen Abständen ausgenutzt, so dass die Datenmenge bei gleichbleibender Qualität merklich reduziert wird. Die sich ergebende Datenmenge als Folge von räumlichen Abständen ist um Größenordnungen kleiner als die im Stand der Technik anfallende Datenmenge zur Übertragung von 3D-Bilddaten als Folge von 2D-Bildern. Darüber hinaus kann die räumliche Kodierung von Abstandswerten schneller durchgeführt werden als die Kompression von 2D-Bilddaten, was es ermöglicht, eine Live-Übertragung von 3D-Bilddaten in Echtzeit durchzuführen, die mit einer geeigneten 3D-Engine beim Empfänger in drei Dimensionen mit interaktiver Blickpunktänderung oder als stereoskopischer Film als mehrere 2D-Bilder pro Frame dargestellt werden können.

Ausführungsbeispiele wurden im Zusammenhang mit der 3D-Darstellung eines Objekts oder eines Teils des Objekts beschrieben. Gemäß weiteren Ausführungsbeispielen kann der beschriebene Ansatz auch bei einer zweidimensionalen Darstellung des Objekts oder des Teils des Objekts eingesetzt werden, z.B. indem die erzeugten Daten, die das 3D-Modell wiedergeben, empfängerseitig nur als 2D-Bilder bzw. als 2D-Bildfolge aufbereitet und zur Anzeige gebracht werden. Auch in diesem Fall ergeben sich die oben erwähnten Vorteile gegenüber einer herkömmlichen Übertragung von 2D-Bildern.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (800) zur Erzeugung eines Modells (810, 810a, 810b) von einem Objekt (812, 812a, 812b) mit Überlagerungsbilddaten (818) in einer virtuellen Umgebung (820), die Vorrichtung (800) weist folgende Merkmale auf:
ein Bilderfassungselement (802), das ausgebildet ist, in einem Betriebsmodus einen Bilddatenstrom (808) von dem Objekt (812) zu erzeugen;
eine Recheneinheit (804), die ausgebildet ist, aus dem Bilddatenstrom (808) ein Modell (810) des Objekts aus einer realen Umgebung (820') zu extrahieren, das extrahierte Modell in die virtuelle Umgebung (820) einzufügen und Überlagerungsbilddaten zumindest einem Teil des Modells zu überlagern, um das Modell (810) von dem Objekt mit Überlagerungsbilddaten in der virtuellen Umgebung zu erzeugen; und
ein Anzeigeelement (806), das ausgebildet ist, das Modell von dem Objekt mit Überlagerungsbilddaten in der virtuellen Umgebung anzuzeigen;
wobei das Bilderfassungselement ausgebildet ist, in der Initialisierungsphase eine Augenpartie oder ein Gesicht einer Person als Objekt zu scannen und als Überlagerungsbilddaten zu speichern, wobei die Recheneinheit ausgebildet ist, in dem Betriebsmodus eine von der Person aufgesetzte Datenbrille mit den in der Initialisierungsphase erhaltenen Überlagerungsbildern zu überlagern,
wobei die Recheneinheit ausgebildet ist, die Augenpartie oder das Gesicht in den Überlagerungsbilddaten basierend auf einem Gemütszustand der Person anzupassen und die angepassten Überlagerungsbilddaten der Person zu überlagern, und
wobei die Bildaufnahmeeinheit ausgebildet ist, eine Mehrzahl von Überlagerungsbilddaten anzulegen, wobei die Recheneinheit ausgebildet ist, die aktuelle Position der Mundwinkel der Person mit einer Position der Mundwinkel in der Mehrzahl von Überlagerungsbilddaten zu vergleichen und somit das Überlagerungsbild, das den aktuellen Gesichtsausdruck bestmöglich wiedergibt, auszuwählen.

2. Vorrichtung (800) gemäß einem der vorherigen Ansprüche, wobei die Recheneinheit (804) ausgebildet ist, eine aktuelle Erscheinungsform des Objekts (812) zu bestimmen und die Überlagerungsbilddaten (818) basierend auf der bestimmen aktuellen Erscheinungsform anzupassen oder Überlagerungsbilddaten aus einer Mehrzahl von Überlagerungsbilddaten basierend auf der bestimmen aktuellen Erscheinungsform auszuwählen und die ausgewählten Überlagerungsbilddaten dem Teil des Objekts zu überlagern.

3. Vorrichtung (800) gemäß Anspruch 2, wobei die Recheneinheit ausgebildet ist, die aktuelle Erscheinungsform des Objekts 30 bis 60 mal pro Sekunde, 35 bis 55 mal pro Sekunde oder 40 bis 50 mal pro Sekunde zu bestimmen.

4. Vorrichtung gemäß einem der vorherigen Ansprüche, wobei die Recheneinheit ausgebildet ist, ein dreidimensionales (3D-)Modell des Objekts mit Überlagerungsbilddaten aus dem Bilddatenstrom (808) zu erzeugen, wobei das Anzeigeelement (806) ausgebildet ist, das 3D-Modell von dem Objekt mit Überlagerungsbilddaten in der virtuellen Umgebung anzuzeigen.

5. Vorrichtung gemäß einem der vorherigen Ansprüche,
wobei die Recheneinheit (804) ausgebildet ist, die erzeugten Überlagerungsbilddaten zu speichern und die gespeicherten Überlagerungsbilddaten dem Teil des Modells zu überlagern, um das Modell von dem Objekt mit Überlagerungsbilddaten in der virtuellen Umgebung zu erzeugen.

6. Verfahren (1200) zur Erzeugung eines Modells von einem Objekt mit Überlagerungsbilddaten in einer virtuellen Umgebung, das Verfahren weist folgende Schritte auf:
Erzeugen (1205), in einem Betriebsmodus, eines Bilddatenstroms von dem Objekt;
Extrahieren (1210) eines Modells des Objekts aus dem Bilddatenstrom aus einer realen Umgebung;
Einfügen (1215) des extrahierten Modells in die virtuelle Umgebung;
Überlagern (1220) der Uberlagerungsbilddaten zumindest einem Teil des Objekts, um das Modell von dem Objekt mit Überlagerungsbilddaten in der virtuellen Umgebung zu erzeugen; und
Anzeigen (1225) des Modells von dem Objekt mit Überlagerungsbilddaten in der virtuellen Umgebung
wobei in der Initialisierungsphase eine Augenpartie oder ein Gesicht einer Person als Objekt gescannt wird und als Überlagerungsbilddaten gespeichert wird, wobei in dem Betriebsmodus eine von der Person aufgesetzte Datenbrille mit den in der Initialisierungsphase erhaltenen Überlagerungsbildern überlagert wird,
wobei die Augenpartie oder das Gesicht in den Überlagerungsbilddaten basierend auf einem Gemütszustand der Person angepasst wird und die angepassten Überlagerungsbilddaten der Person überlagert werden, und
wobei eine Mehrzahl von Überlagerungsbilddaten angelegt werden, wobei die aktuelle Position der Mundwinkel der Person mit einer Position der Mundwinkel in der Mehrzahl von Überlagerungsbilddaten verglichen wird und somit das Überlagerungsbild, das den aktuellen Gesichtsausdruck bestmöglich wiedergibt, ausgewählt wird.

7. Computerprogramm mit Anweisungen zum Ausführen des Verfahrens gemäß Anspruch 6, wenn die Anweisungen durch einen Computer ausgeführt werden.

## Claims

1. Device (800) for generating a model (810, 810a, 810b) of an object (812, 812a, 812b) with superposition image data (818) in a virtual environment (820), the device (800) comprising:
an image capturing element (802) configured to generate, in a mode of operation, an image data stream (808) of the object (812);
a calculating unit (804) configured to extract, from the image data stream (808), a model (810) of the object from a real environment (820'), to insert the extracted model into the virtual environment (820), and to superpose at least part of the model with superposition image data so as to generate the model (810) of the object with superposition image data in the virtual environment; and
a display element (806) configured to display the model of the object with superposition image data in the virtual environment;
wherein the image capturing element is configured, during the initialization phase, to scan a person's area of the eyes or a face as the object and to store it as superposition image data, wherein the calculating unit is configured to superpose, in the mode of operation, smart glasses worn by the person with the superposition images acquired during the initialization phase,
wherein the calculating unit is configured to adapt the area of the eyes or the face in the superposition image data on the basis of the person's frame of mind and to superpose it with the adapted superposition image data of the person, and
wherein the image capturing unit is configured to create a plurality of superposition image data, wherein the calculating unit is configured to compare the current position of the person's corners of the mouth with a position of the corners of the mouth in the plurality of superposition image data and to therefore select that superposition image which renders the current facial expression in the best manner possible.

2. Device (800) according to any one of the preceding claims, wherein the calculating unit (804) is configured to determine a current outward appearance of the object (812) and to adapt the superposition image data (818) on the basis of the determined current outward appearance, or to select superposition image data from a plurality of superposition image data on the basis of the determined current outward appearance and to superpose that part of the object with the superposition image data selected.

3. Device (800) according to claim 2, wherein the calculating unit is configured to determine the current outward appearance of the object 30 to 60 times per second, 35 to 55 times per second, or 40 to 50 times per second.

4. Device according to any one of the preceding claims, wherein the calculating unit is configured to generate a three-dimensional (3D) model of the object with superposition image data from the image data stream (808), wherein the display element (806) is configured to display the 3D model of the object with superposition image data in the virtual environment.

5. Device according to any one of the preceding claims,
wherein the calculating unit (804) is configured to store the generated superposition image data and to superpose the part of the model with the stored superposition image data so as to generate the model of the object with superposition image data in the virtual environment.

6. Method (1200) of generating a model of an object with superposition image data in a virtual environment, the method comprising:
generating (1205), in a mode of operation, an image data stream of the object;
extracting (1210) a model of the object from the image data stream from a real environment;
inserting (1215) the extracted model into the virtual environment;
superposing (1220) at least part of the object with the superposition image data so as to generate the model of the object with superposition image data in the virtual environment; and
displaying (1225) the model of the object with superposition image data in the virtual environment,
wherein during the initialization phase, a person's area of the eyes or face is scanned as an object and stored as superposition image data, wherein smart glasses worn by the person are superposed, in the mode of operation, with the superposition images acquired during the initialization phase,
wherein the area of the eyes or the face in the superposition image data is adapted on the basis of the person's frame of mind, and is superposed with the adapted superposition image data of the person, and
wherein a plurality of superposition image data are created, wherein the current position of the person's corners of the mouth is compared with a position of the corners of the mouth in the plurality of superposition image data, and the superposition image which renders the current facial expression in the best manner possible is selected.

7. Computer program with instructions for performing the method according to claim 6 when said instructions are executed by a computer.

## Revendications

1. Dispositif (800) pour générer un modèle (810, 810a, 810b) d'un objet (812, 812a, 812b) au moyen de données d'image de superposition (818) dans un environnement virtuel (820), le dispositif (800) présentant les caractéristiques suivantes:
un élément de capture d'image (802) qui est conçu pour générer, dans un mode de fonctionnement, un flux de données d'image (808) de l'objet (812);
une unité de calcul (804) qui est conçue pour extraire du flux de données d'image (808) un modèle (810) de l'objet d'un environnement réel (820'), pour insérer le modèle extrait dans l'environnement virtuel (820) et pour superposer les données d'image de superposition à au moins une partie du modèle pour générer le modèle (810) de l'objet au moyen des données d'image de superposition dans l'environnement virtuel; et
un élément d'affichage (806) qui est conçu pour afficher le modèle de l'objet au moyen des données d'image de superposition dans l'environnement virtuel;
dans lequel l'élément de capture d'image est conçu pour balayer, dans la phase d'initialisation, une région des yeux ou un visage d'une personne comme objet et pour la ou le mémoriser comme données d'image de superposition, dans lequel l'unité de calcul est conçue pour superposer, en mode de fonctionnement, des lunettes de données portées par la personne par les images de superposition obtenues dans la phase d'initialisation,
dans lequel l'unité de calcul est conçue pour adapter la région des yeux ou le visage dans les données d'image de superposition sur base d'un état émotionnel de la personne et pour superposer les données d'image de superposition adaptées de la personne, et dans lequel l'unité de prise de vue est conçue pour appliquer une pluralité de données d'image de superposition, dans lequel l'unité de calcul est conçue pour comparer la position actuelle des commissures des lèvres de la personne avec une position des commissures des lèvres dans la pluralité de données d'image de superposition et pour sélectionner ainsi l'image de superposition qui reproduit le mieux l'expression faciale actuelle.

2. Dispositif (800) selon l'une des revendications précédentes, dans lequel l'unité de calcul (804) est conçue pour déterminer une apparence actuelle de l'objet (812) et pour adapter les données d'image de superposition (818) sur base de l'apparence actuelle déterminée ou pour sélectionner les données d'image de superposition parmi une pluralité de données d'image de superposition sur base de l'apparence actuelle déterminée et pour superposer les données d'image de superposition sélectionnées à la partie de l'objet.

3. Dispositif (800) selon la revendication 2, dans lequel l'unité de calcul est conçue pour déterminer l'apparence actuelle de l'objet de 30 à 60 fois par seconde, de 35 à 55 fois par seconde ou de 40 à 50 fois par seconde.

4. Dispositif selon l'une des revendications précédentes, dans lequel l'unité de calcul est conçue pour générer un modèle tridimensionnel (3D) de l'objet au moyen de données d'image de superposition à partir du flux de données d'image (808), dans lequel l'élément d'affichage (806) est conçu pour afficher le modèle 3D de l'objet au moyen des données d'image de superposition dans l'environnement virtuel.

5. Dispositif selon l'une des revendications précédentes,
dans lequel l'unité de calcul (804) est configurée pour mémoriser les données d'image de superposition générées et pour superposer les données d'image de superposition mémorisées à la partie du modèle pour générer le modèle de l'objet au moyen des données d'image de superposition dans l'environnement virtuel.

6. Procédé (1200) pour générer un modèle d'un objet au moyen de données d'image de superposition dans un environnement virtuel, le procédé présentant les étapes suivantes consistant à:
générer (1205), dans un mode de fonctionnement, un flux de données d'image de l'objet;
extraire (1210) un modèle de l'objet du flux de données d'image d'un environnement réel;
insérer (1215) le modèle extrait dans l'environnement virtuel;
superposer (1220) les données d'image de superposition au moins à une partie de l'objet pour générer le modèle de l'objet au moyen de données d'image de superposition dans l'environnement virtuel; et
afficher (1225) le modèle de l'objet au moyen des données d'image de superposition dans l'environnement virtuel,
dans lequel, dans la phase d'initialisation, une région des yeux ou un visage d'une personne est balayé(e) comme objet et mémorisé(e) comme données d'image de superposition, dans lequel, dans le mode de fonctionnement, des lunettes de données portées par la personne sont superposées par les images de superposition obtenues dans la phase d'initialisation,
dans lequel la région des yeux ou le visage est adapté(e) dans les données d'image de superposition sur base d'un état émotionnel de la personne et les données d'image de superposition adaptées de la personne sont superposées, et
dans lequel sont appliquées une pluralité de données d'image de superposition, dans lequel la position actuelle des commissures des lèvres de la personne est comparée à une position des commissures des lèvres dans la pluralité de données d'image de superposition et l'image de superposition qui reproduit le mieux l'expression faciale actuelle est ainsi sélectionnée.

7. Programme d'ordinateur avec des instructions pour la réalisation du procédé selon la revendication 6 lorsque les instructions sont exécutées par un ordinateur.
